# EUROPÄISCHE PATENTSCHRIFT

(11) **EP 4 090 618 B1**
(45) Veröffentlichungstag und Bekanntmachung des Hinweises auf die Patenterteilung: **08.05.2024**
(21) Anmeldenummer: 21701422.4
(22) Anmeldetag: 15.01.2021
(51) Int. Cl.: B66B 9/02, B62D 55/065, B62D 55/084, B62D 55/06

(54) **LINEARMOTORISCH ANGETRIEBENES RAUPENFAHRZEUG**
LINEAR-MOTOR-DRIVEN TRACKED VEHICLE
VÉHICULE À CHENILLES ENTRAÎNÉ PAR UN MOTEUR LINÉAIRE

(30) Priorität: 17.01.2020 DE 102020101114
(43) Veröffentlichungstag der Anmeldung: 23.11.2022
(73) Patentinhaber: MagneCat UG (haftungsbeschränkt), 95444 Bayreuth (DE)
(72) Erfinder: KEPPNER, Achim, 95445 Bayreuth (DE)
(74) Vertreter: Ruttensperger Lachnit Trossin Gomoll
(86) Internationale Anmeldenummer: PCT/EP2021/050803
(87) Internationale Veröffentlichungsnummer: WO 2021/144418

(56) Entgegenhaltungen:
- EP-A2- 0 716 006
- WO-A2-2008/136692
- JP-A- H06 127 373
- US-A- 5 433 293

## Beschreibung

Die vorliegende Erfindung betrifft ein Raupenfahrzeug gemäß dem Oberbegriff von Anspruch 1 sowie ein Fahrzeugsystem mit einem solchen Raupenfahrzeug und einer Fahrbahnanordnung.

Ein gattungsgemäßes Raupenfahrzeug mit linearmotorisch angetriebener Antriebsraupe ist aus der JP H06 127373 A bekannt.

Flurgebundene Raupenfahrzeuge, welche auf horizontalen oder leicht geneigten Oberflächen fahren, sind z. B. in der Form von Raupenbaggern bekannt. Aus der UA 65559 C2 ist ein Raupenfahrzeug bekannt, welches dazu ausgebildet ist, eine ferromagnetische Oberfläche zu befahren. In dem bekannten Raupenfahrzeug treibt ein Linearmotor eine Antriebsraupe an. In der Antriebsraupe sind ferromagnetische Einsätze vorgesehen, in welchen durch fahrzeugrahmenfeste Permanentmagnete ein Magnetfeld induziert wird, das eine anziehende Magnetkraft zwischen der Antriebsraupe und der ferromagnetischen Oberfläche bewirkt. Das Raupenfahrzeug umfasst ferner Spulen zur Erzeugung eines Magnetfelds, mittels welchem die ferromagnetischen Einsätze und somit die Antriebsraupe in umlaufende Bewegung versetzt werden. Die UA 65559 C2 beschreibt, dass die Geschwindigkeit des Linearmotors durch die Stromstärke des die Spulen durchfließenden Stroms geregelt wird. Gemäß UA 65559 C2 soll das bekannte Raupenfahrzeug aufgrund der oben beschriebenen magnetischen Anziehungskraft zwischen der Antriebsraupe und der ferromagnetischen Oberfläche sogar in vertikaler Richtung entlang einer entsprechend vertikal orientierten ferromagnetischen Oberfläche verfahrbar sein.

Nachteilig an dem Raupenfahrzeug der UA 65559 C2 ist, dass nur die sich augenblicklich zwischen den Permanentmagneten und dem befahrenen Untergrund befindenden ferromagnetischen Einsätze einen Beitrag zur Haftung des Raupenfahrzeugs an der ferromagnetischen Oberfläche leisten, wodurch ein Wechsel der Ausrichtung der befahrenen ferromagnetischen Oberfläche von horizontal zu vertikal auf kleinem Raum nicht von dem Raupenfahrzeug der UA 65559 C2 bewältigt werden kann. Ferner kann sich die Antriebsraupe aufgrund von Oberflächenunebenheiten der im Betrieb befahrenen und daher von der Antriebsraupe kontaktierten Oberfläche von den Permanentmagneten entfernen, was zu einer Vergrößerung des Luftspalts zwischen den Permanentmagneten und den ferromagnetischen Einsätzen und in der Folge zu einer Schwächung des die anziehende Magnetkraft bewirkenden Magnetfelds in den ferromagnetischen Einsätzen führen kann. In einem vertikalen Verfahrbetrieb kann dies zu einem Absturz des Raupenfahrzeugs führen.

Es ist daher die Aufgabe der vorliegenden Erfindung, ein sicheres und einfaches Raupenfahrzeug zum Befahren von ferromagnetischen Oberflächen, sowie ein Fahrzeugsystem aus einem Raupenfahrzeug und einer passenden Fahrbahnanordnung bereitzustellen.

Diese Aufgabe wird erfindungsgemäß durch ein Raupenfahrzeug nach Anspruch 1 und ein Fahrzeugsystem nach Anspruch 11 gelöst. Bevorzugte Ausführungsformen der Erfindung sind in den Unteransprüchen beschrieben.

Ein erfindungsgemäßes Raupenfahrzeug umfasst eine Lastenbaugruppe; eine Antriebsraupe, welche an der Lastenbaugruppe zur Ausführung einer Bewegung längs einer Umlaufbahn der Antriebsraupe beweglich gehalten ist; einen Linearmotor, wobei ein Stator des Linearmotors ortsfest bezüglich der Lastenbaugruppe angeordnet ist und wobei ein Läufer des Linearmotors zur gemeinsamen Bewegung mit der Antriebsraupe angeordnet ist, wobei der Läufer in der Antriebsraupe ausgebildet ist; und wobei der Läufer in der Antriebsraupe angeordnete und zur gemeinsamen Bewegung mit der Antriebsraupe ausgebildete Permanentmagnete aufweist.

Das Vorsehen von Permanentmagneten in dem Läufer zur gemeinsamen Bewegung mit der Antriebsraupe vereinfacht den Aufbau des Linearmotors gegenüber der UA 65559 C2, da auf lastenbaugruppenfeste Permanentmagnete verzichtet werden kann. Die Permanentmagnete des Läufers des erfindungsgemäßen Raupenfahrzeugs weisen eine Doppelfunktion als Teil des Linearmotors und als eine Anziehungskraft zwischen dem Raupenfahrzeug und einem magnetisierbaren Untergrund bereitstellende Elemente auf. Da die anziehende Magnetkraft zwischen den Permanentmagneten und einem magnetisierbaren Untergrund, welcher eine Ausführungsform einer Fahrbahnanordnung mit einer magnetisierbaren Trageanordnung ist, nicht von dem sich gegebenenfalls im dynamischen Fahrbetrieb lokal ändernden Abstand der Antriebsraupe von dem Stator abhängt, wird sicher eine im Wesentlichen konstante Anziehungskraft zwischen dem Raupenfahrzeug und einem magnetisierbaren Untergrund durch das Raupenfahrzeug bereitgestellt.

In einer besonders bevorzugten Ausführungsform liegt zwischen dem Stator und dem Läufer eines Linearmotors ein Luftspalt vor, der bei Bestromung des Stators durch die Wechselwirkung der Magnetfelder des Stators und des Läufers ohne Zuhilfenahme von weiteren Stützelementen wie Rollen, Gleitlagern oder Ähnlichem durch die Dimensionierung der Magnetfelder in dem Läufer und dem Stator im bestimmungsgemäßen Betrieb des Raupenfahrzeugs (analog einem Maglev- oder Magnetschwebe-Verfahren ("Maglev" ist die Abkürzung für "magnetic levitation") offen gehalten wird.

Im Folgenden wird, wenn von einer von dem Raupenfahrzeug befahrenen oder befahrbaren Anordnung gesprochen wird, auf welche eine durch eine magnetische Wechselwirkung mit den Permanentmagneten des Läufers bewirkte Anziehungskraft durch die Antriebsraupe ausgeübt wird, von einer Fahrbahnanordnung gesprochen. Die Fahrbahnanordnung kann beispielsweise eine magnetisierbare Platte aufweisen, z. B. umfassend oder bestehend aus Eisen oder magnetisierbarem Stahl, auf welcher das Raupenfahrzeug fährt. Wenngleich zwischen einer Trageanordnung des Untergrunds bzw. der Fahrbahnanordnung, welche das direkt magnetisierbare Material der Fahrbahnanordnung aufweist und somit für die magnetische Wechselwirkung mit der Antriebsraupe sorgt, und der Raupenaufstandsfläche des Untergrunds bzw. Fahrbahnanordnung, welche von der Antriebsraupe beim Befahren der Fahrbahnanordnung durch das Raupenfahrzeug entlang eines Bewegungspfads berührt wird, nicht-magnetisierbares Material vorgesehen sein kann, ist die Raupenaufstandsfläche wegen der bei ansonsten gleichem Aufbau höheren erzielbaren Anziehungskraft bevorzugt eine Oberfläche der Trageanordnung.

Es ist bevorzugt, dass längs der Umlaufbahn der Antriebsraupe in der Antriebsraupe hintereinander angeordnete Permanentmagnetanordnungen mit innerhalb einer Permanentmagnetanordnung einheitlicher, jedoch über mehrere bzw. alle Permanentmagnetanordnungen hinweg alternierender entgegengesetzter Polarisationsrichtung angeordnet sind. Dies erlaubt eine optimale Ausnutzung des durch den Stator ausbildbaren Magnetfelds für den Vortrieb des Raupenfahrzeugs. Eine derartige Anordnung von Permanentmagneten kann eine Halbach-Anordnung (auch als "Halbach-Array" bezeichnet) sein, bei welcher zwischen zwei Permanentmagnetanordnungen mit alternierender Polarisierung wenigstens ein Rückflussmagnet mit abweichender, zumeist relativ zur Polarisierung der Permanentmagnetanordnungen orthogonaler Polarisierung angeordnet ist. Zwischen hintereinander angeordneten Permanentmagnetanordnungen können in der Antriebsraupe weitere Permanentmagnete des Läufers angeordnet sein. Es ist jedoch zur Erreichung eines symmetrischen Magnetfeldes zur Wechselwirkung mit der Fahrbahnanordnung und mit dem Stator bevorzugt, dass längs der Umlaufbahn einander direkt aufeinanderfolgende und in der Antriebsraupe angeordnete Permanentmagnetanordnungen mit innerhalb derselben Permanentmagnetanordnung einheitlicher, jedoch über mehrere bzw. alle Permanentanordnungen hinweg alternierender entgegengesetzter Polarisationsrichtung angeordnet sind. Die in der Antriebsraupe angeordneten und zur gemeinsamen Bewegung mit der Antriebsraupe angeordneten oder/und ausgebildeten Permanentmagnetanordnungen des Läufers umfassen die längs der Umlaufbahn in der Antriebsraupe hintereinander oder/und unmittelbar aufeinanderfolgend angeordneten Permanentmagnetanordnungen oder sind durch sie gebildet.

Eine in dem vorangehenden Absatz beschriebene Antriebsraupe kann insbesondere besonders kompakt ausgebildet sein, gleiches gilt für Kettenglieder, welche die Antriebsraupe umfassen kann. Hierdurch kann der Antrieb des Raupenfahrzeugs kompakt ausgebildet sein.

Eine Permanentmagnetanordnung kann genau einen oder eine Mehrzahl von Permanenten aufweisen. Insbesondere bei längs der Umlaufbahn kurzen Kettengliedern kann es zur Erzielung ausreichender linearmotorischer Vortriebskraft vorteilhaft sein, Permanentmagnetanordnungen mit jeweils einer Mehrzahl von mit identischer Polarisierung angeordneten Permanentmagneten zu verwenden, wobei unterschiedliche längs der Umlaufbahn aufeinander folgende Permanentmagnetanordnungen mit alternierenden Polarisierungen angeordnet sind. Umfasst eine Permanentmagnetanordnung mehr als einen Permanentmagneten, sind die Permanentmagnete einer Permanentmagnetanordnung bevorzugt längs der Umlaufbahn hintereinander und unmittelbar aufeinander folgend angeordnet. Sind Permanentmagnetanordnungen mit jeweils mehreren Permanentmagneten vorgesehen, weisen zur Erzielung eines längs der Umlaufbahn möglichst gleichförmigen Läufer-Magnetfelds bevorzugt alle Permanentmagnetanordnungen mit relativ zueinander alternierenden Polarisierungsrichtungen eine identische Anzahl an Permanentmagneten auf.

Insbesondere im Falle der Bildung einer Permanentmagnetanordnung aus mehreren Permanentmagneten können diese zur Erhöhung der Unempfindlichkeit der Permanentmagnetanordnung gegen lokale Beschädigung stab- oder/und nadelförmige Permanentmagnete umfassen oder aus diesen gebildet sein. Der einzelne Permanentmagnet aus einer Mehrzahl von eine Permanentmagnetanordnung bildenden Permanentmagneten weist also längs seiner Polarisierungsrichtung bevorzugt eine größere Abmessung auf als orthogonal zu dieser.

Nachfolgend wird zur Erleichterung der Beschreibung der Erfindung von bevorzugten Permanentmagnetanordnungen ausgegangen, die jeweils nur genau einen Permanentmagneten aufweisen. Deshalb gilt das zuvor zur Permanentmagnetanordnung Gesagte ebenso für den im Folgenden anstelle der Permanentmagnetanordnung genannten Permanentmagneten.

Die Polarisationsrichtung eines Permanentmagneten (z. B. eine Richtung, welche vom Nordpol zum Südpol des Permanentmagneten zeigt) verläuft vorzugsweise quer oder orthogonal zu der Umlaufbahn oder/und weist vorzugsweise von einem von der Antriebsraupe umschlossenen Innenbereich der Antriebsraupe in einen außerhalb der Antriebsraupe liegenden Außenbereich der Antriebsraupe, oder umgekehrt.

Das Raupenfahrzeug kann eine Positionserfassungseinrichtung umfassen, um eine Umlaufstellung der Antriebsraupe entlang der Umlaufbahn der Antriebsraupe zu bestimmen. Die Positionserfassungseinrichtung kann zwischen Statorabschnitten angeordnet sein oder/und kann dafür eingerichtet sein, eine Relativposition von Permanentmagneten in der Antriebsraupe relativ zum Stator zu bestimmen.

Insbesondere weist der Stator längs wenigstens eines Abschnitts der Umlaufbahn hintereinander angeordnete Statorwicklungen zur Erzeugung eines Magnetfelds bei Bestromung der Statorwicklungen auf; wobei das Raupenfahrzeug einen mit den Statorwicklungen elektrisch leitend verbundenen Stromrichter aufweist, durch welchen insbesondere die Statorwicklungen bestrombar sind. Hierdurch kann durch Bestromung der Statorwicklungen ein wanderndes Magnetwechselfeld ausgebildet werden, um eine die Antriebsraupe antreibende Antriebskraft zu bewirken, wobei diese Antriebskraft an den Permanentmagneten des Läufers angreift.

Dem Raupenfahrzeug kann eine Wechselspannung, vorzugsweise eine mehrphasige, insbesondere eine 3-phasige, Wechselspannung zur Versorgung des Stromrichters bereitgestellt werden, sodass der Stromrichter bevorzugt als ein Frequenzwandler mit einer Mehrzahl an Eingangsphasen, insbesondere drei Eingangsphasen, oder/und mit einer Mehrzahl von Ausgangsphasen, insbesondere drei Ausgangsphasen, ausgebildet ist. Jede der Ausgangsphasen kann eine Wechselspannung ausgeben, deren Amplitude oder/und Frequenz oder/und Phase durch den Stromrichter geregelt/gesteuert werden kann. Diese Regelung/Steuerung kann unter Verwendung einer PWM-Vorrichtung mittels Pulsbreiten-Modulierung (PWM = "Pulse Width Modulation") durchgeführt werden. Ein derartiger Stromrichter kann ein Frequenzumrichter sein, der eingangsseitig einen Gleichrichter, ausgangsseitig einen Wechselrichter und einen zwischen dem Gleichrichter und dem Wechselrichter elektrisch geschalteten Gleichspannungs-Zwischenkreis umfassen kann, wobei der Gleichspannung-Zwischenkreis von dem Gleichrichter elektrisch gespeist wird und wobei der Gleichspannungs-Zwischenkreis den Wechselrichter elektrisch speist. Die PWM-Vorrichtung kann Teil des Stromrichters sein.

Die Statorwicklungen jedes einzelnen der Linearmotoren des Raupenfahrzeugs können mit einem separaten, dem jeweiligen Linearmotor zugeordneten Stromrichter elektrisch leitend verbunden sein, um diese Statorwicklungen zu bestromen. Ebenso können die Statorwicklungen einer Mehrzahl von oder von allen Linearmotoren des Raupenfahrzeugs mit einem gemeinsamen Stromrichter elektrisch leitend verbunden sein, um diese Statorwicklungen zu bestromen.

Das Raupenfahrzeug kann dafür eingerichtet sein, von außen z. B. über einen gebäudeseitigen Gleichrichter mit einer Gleichspannung zur Versorgung des wenigstens einen am Raupenfahrzeug mitgeführten Stromrichters zur Bestromung der Statorwicklungen mit elektrischer Energie versorgt zu werden. Der in diesem Fall verwendete Stromrichter kann einen direkt durch diese Gleichspannung elektrisch gespeisten Gleichspannungs-Zwischenkreis und einen von dem Gleichspannungs-Zwischenkreis elektrisch gespeisten und mit ihm elektrisch verbundenen Wechselrichter, jedoch keinen Gleichrichter zur elektrischen Speisung des Gleichspannungs-Zwischenkreises umfassen, was zu einer vorteilhaften Gewichtsreduktion des Raupenfahrzeugs führt.

Um einen unterbrechungsfreien Betrieb des Raupenfahrzeugs auch bei Unterbrechung der gebäudeseitigen Stromzufuhr sicherzustellen, kann das Raupenfahrzeug einen Energiespeicher zur Versorgung des Stromrichters mit elektrischer Energie umfassen, wobei vorzugsweise der Energiespeicher separat vom Stromrichter ausgebildet ist. Insbesondere hat dieser Energiespeicher somit keine Funktion bei einer Anpassung einer Ausgangsspannung, eines Ausgangsstroms, einer Ausgangsfrequenz und einer Ausgangsphase des Stromrichters durch den Stromrichter.

Das Raupenfahrzeug kann besonders einfach und zuverlässig mit elektrischer Energie versorgt werden, wenn es einen Stromabnehmer zur Versorgung des Stromrichters mit elektrischer Energie umfasst.

Unter der Lastenbaugruppe wird eine eine Last in dem Raupenfahrzeug tragende Baugruppe verstanden. Die Last umfasst wenigstens die Eigenlast des Raupenfahrzeugs, bevorzugt zusätzlich auch eine zuladbare Nutzlast. Die Lastenbaugruppe kann einen Rahmen des Raupenfahrzeugs umfassen, an welchem beispielsweise der Stator oder/und eine Bewegungsführung der Antriebsraupe angeordnet oder/und befestigt ist bzw. sind. An dem Rahmen der Lastenbaugruppe festgelegte Bauteile sind auch Bauteile der Lastenbaugruppe. Die Lastenbaugruppe kann einen Lastenaufnahmeraum, insbesondere eine Kabine zur Beförderung von Personen oder/und Lasten oder eine Arretierungsvorrichtung, z. B. zur Ausbildung einer lösbaren sicheren Verbindung eines Personen- oder/und Lastencontainers mit der Lastenbaugruppe umfassen.

In Anbetracht der erfindungsgemäßen Ausgestaltung des Raupenfahrzeugs kann eine Lastenbaugruppe als eine eine Last in dem Raupenfahrzeug tragende Baugruppe nur so verstanden werden, dass die Lastenbaugruppe für die Übertragung wenigstens der Eigenlast des Raupenfahrzeugs über die Antriebsraupe auf die Raupenaufstandsfläche des Untergrunds bzw. der Fahrbahnanordnung sorgt, mit welcher die Antriebsraupe in Kontakt ist.

In der vorliegenden Anmeldung gilt als Aufstandsrichtung eine Richtung, welche normal zur Raupenaufstandsfläche des Untergrunds bzw. der Fahrbahnanordnung verläuft. Die Aufstandsrichtung verläuft vorzugsweise parallel zur Gierachse des Raupenfahrzeugs. Das Raupenfahrzeug kann eine in einer Ebene quer, vorzugsweise senkrecht, zur Aufstandsrichtung drehbare Halteplattform, oder eine Mehrzahl derartiger jeweils in einer jeweiligen Ebene quer, vorzugsweise senkrecht, zur Aufstandsrichtung drehbaren Halteplattformen umfassen. An einer, an einer Mehrzahl der oder an jeder dieser Halteplattformen kann eine oder eine Mehrzahl an Antriebsraupen angeordnet sein. Mit einer, einer Mehrzahl der oder jeder der Halteplattformen kann vorzugsweise unter Verwendung von Schrauben oder/und Nieten oder/ und Schweißnähten oder/und einem Kleber ein zugeordnetes Gestell oder eine Mehrzahl an zugeordneten Gestellen verbunden sein. Jedes der Gestelle kann einen Stator eines Linearmotors tragen, welcher eine Antriebsraupe antreiben kann, die vorzugsweise das Gestell umläuft. Eine Lastenbaugruppe kann ein derartiges Gestell oder/und eine Mehrzahl von im Wesentlichen starr miteinander verbundenen derartigen Gestellen umfassen oder hierdurch ausgebildet sein. Weiterhin kann eine Lastenbaugruppe die oben genannte Halteplattform umfassen, mit welcher das wenigstens derartige Gestell zur gemeinsamen Bewegung verbunden ist.

Um einen Übergang von horizontalen zu vertikalen Abschnitten einer Fahrbahnanordnung bei einer Fahrt unter einem eigenem Antrieb des Raupenfahrzeugs bewältigen zu können, läuft die Antriebsraupe bevorzugt um die Lastenbaugruppe längs der Umlaufbahn um. Um mit möglichst geringen Außenabmessungen des Raupenfahrzeugs an jedem beliebigen Punkt der Antriebsraupe eine Anlage der Antriebsraupe an einem Untergrund erzielen zu können, kann die gesamte Umlaufbahn entlang einer Außenkontur des Raupenfahrzeugs verlaufen.

Die Antriebsraupe kann eine Mehrzahl von miteinander schwenkbar verbundenen Kettengliedern umfassen. Vorzugsweise ist jedes Kettenglied starr ausgebildet. Zusätzlich oder alternativ ist in einem, einer Mehrzahl von oder jedem Kettenglied ein Permanentmagnet des Läufers angeordnet. Auf einer der zu befahrenden Fläche, insbesondere einer Raupenaufstandsfläche der Fahrbahnanordnung, zugewandten Aufstandsfläche der Antriebsraupe kann zur Minderung des Abrollgeräusches oder/und zur Dämpfung von Abrollstößen eine Puffereinheit, beispielsweise ein Gummiblock, angeordnet sein.

Ein Kettenglied, eine Mehrzahl der oder alle Kettenglieder können im Wesentlichen plattenförmig ausgebildet sein. Vorzugsweise erstreckt sich mindestens einer der, eine Mehrzahl der oder alle der in der Antriebsraupe angeordneten und zur gemeinsamen Bewegung mit der Antriebsraupe ausgebildeten Permanentmagnete des Läufers innerhalb eines jeweiligen im Wesentlichen plattenförmig ausgebildeten Kettengliedes, welches dem Permanentmagneten oder der Mehrzahl der Permanentmagnete zugeordnet ist. Einer der, eine Mehrzahl der oder alle der in der Antriebsraupe angeordneten und zur gemeinsamen Bewegung mit der Antriebsraupe ausgebildeten Permanentmagnete des Läufers können im Wesentlichen plattenförmig ausgebildet sein.

In dem erfindungsgemäßen Raupenfahrzeug wird vorzugsweise die Antriebskraft zugkraftfrei, also insbesondere ohne eine Zugkraftübertragung zwischen direkt benachbarten und miteinander direkt verbundenen Kettengliedern, auf die Kettenglieder übertragen. Vorzugsweise werden keine Kippmomente bei der Übertragung der Antriebskraft auf die Kettenglieder übertragen.

Ein Umlauf einer Antriebsraupe beim Befahren einer Fahrbahnanordnung ist von Lösevorgängen, bei welchem sich ein Abschnitt der Antriebsraupe von der Fahrbahnanordnung löst, und von Kontaktierungsvorgängen, bei welchen ein Abschnitt der Antriebsraupe in Kontakt mit der Fahrbahnanordnung tritt, begleitet. Aufgrund der Anziehungskraft zwischen den Permanentmagneten des Läufers und der Fahrbahnanordnung sind die Lösevorgänge und Kontaktierungsvorgänge häufig von einer starken Geräuschentwicklung und von Ruckbewegungen und Vibrationen begleitet. Die Geräuschentwicklung oder/und die Ruckbewegungen oder/und die Vibrationen können abgeschwächt werden, wenn die Antriebsraupe einen Neutralisierungstrum umfasst, in welchem eine aktivierbare Neutralisierungsmagnetanordnung des Raupenfahrzeugs angeordnet ist; wobei die Neutralisierungsmagnetanordnung dafür eingerichtet ist, an dem Neutralisierungstrum ein Magnetfeld auszubilden, welches ein Magnetfeld eines Permanentmagneten, der sich in dem Neutralisierungstrum befindet, betragsmäßig abschwächt oder sogar neutralisiert. Das Vorsehen eines Neutralisierungstrums verhindert ungewollte Beschleunigungen der Antriebsraupe durch ein Annähern eines Permanentmagneten des Läufers an die Fahrbahnanordnung und ungewollte Abbremsungen der Antriebsraupe durch ein Entfernen eines Permanentmagneten des Läufers von der Fahrbahnanordnung. Die aktivierbare Neutralisierungsmagnetanordnung kann einen Elektromagneten oder eine Elektromagnetanordnung umfassen oder durch diese ausgebildet sein. Die Aktivierung einer derartigen Neutralisierungsmagnetanordnung kann durch eine Bestromung des Elektromagneten oder der Elektromagnetanordnung erfolgen. Ferner kann die Neutralisierungsanordnung einen oder/und mehrere Detektoren zur Bestimmung des Magnetfeldes des oder der Permanentmagneten umfassen, der/die sich in dem Neutralisierungstrum befinden, sodass eine Bestromung der Elektromagneten der Neutralisierungsanordnung in Übereinstimmung mit dem so bestimmten Magnetfeld des oder der Permanentmagneten, die sich in dem Neutralisierungstrum befinden, geregelt oder/und gesteuert werden kann.

Die Neutralisierungsmagnetanordnung ist insbesondere separat von und zusätzlich zu den Permanentmagneten des Läufers, insbesondere ortsfest bezüglich der Lastenbaugruppe vorgesehen.

Wird im Rahmen dieser Anmeldung von einem Trum der Antriebsraupe gesprochen, so ist hierunter ein Abschnitt der zumindest zeitweise umlaufenden Antriebsraupe zu verstehen, welcher sich in einem im Wesentlichen ortsfesten Raumabschnitt bezüglich zumindest eines Abschnitts der Lastenbaugruppe befindet. Ein Aufstandsflächenkontakttrum ist im Normalbetrieb des Raupenfahrzeugs jener Raumabschnitt, in welchem die Antriebsraupe eine Raupenaufstandsfläche einer Fahrbahnanordnung oder eine zu befahrende Fläche, z. B. eine Straße, kontaktiert. Ein Umlenktrum ist ein zwischen zwei weiteren Trumen angeordneter Trum, wobei in dem Umlenktrum die Antriebsraupe in einer anderen Richtung verläuft, als in den beiden an das Umlenktrum anschließenden Trumen oder/und wobei in dem Umlenktrum die Umlaufbahn der Antriebsraupe ihre Richtung ändert. Ein Umlenktrum kann beispielsweise zwischen einem weiteren Umlenktrum der Antriebsraupe und einem Aufstandsflächenkontakttrum der Antriebsraupe angeordnet sein. In der Regel befindet sich das Aufstandsflächenkontakttrum zwischen zwei Umlenktrumen.

Die Antriebsraupe kann einen Aufstandsflächenkontakttrum und wenigstens zwei Umlenktrume umfassen, wobei jeder Umlenktrum entlang der Umlaufbahn direkt an den Aufstandsflächenkontakttrum anschließen kann. Der Neutralisierungstrum kann dabei einen an einen der Umlenktrume direkt angrenzenden Abschnitt des Aufstandsflächenkontakttrums umfassen oder/und kann einen Abschnitt der Antriebsraupe in einem Übergangsbereich zwischen dem Aufstandsflächenkontakttrum und einem Umlenktrum umfassen oder/und kann einen Abschnitt des Aufstandsflächenkontakttrums oder den vollständigen Aufstandsflächenkontakttrum umfassen. Eine Schmiegefläche oder Schmiegeebene des Aufstandsflächenkontakttrums kann sich mit einer Schmiegefläche oder Schmiegeebene eines Umlenktrums schneiden, vorzugsweise längs einer zur Vortriebsrichtung des Raupenfahrzeugs orthogonalen Schnittgeraden. Bei einer bestimmungsgemäßen Geradeausfahrt des Raupenfahrzeugs auf der Raupenaufstandsfläche bildet der Aufstandsflächenkontakttrum einen Berührkontakt mit der Raupenaufstandsfläche aus, und mindestens einer, vorzugsweise beide der Umlenktrume sind von der Raupenaufstandsfläche bei einer bestimmungsgemäßen Geradeausfahrt zumindest abschnittsweise beabstandet.

Zur Erhöhung seiner Stabilität oder/und seiner Lenkbarkeit kann das Raupenfahrzeug eine Mehrzahl von Antriebsraupen umfassen, wobei weiter bevorzugt jede aus einer Mehrzahl von Antriebsraupen wie die oben beschriebene Antriebsraupe ausgebildet ist. Insbesondere umfasst mindestens eine der, eine Mehrzahl der, oder vorzugsweise jede der Antriebsraupen einen Läufer eines die Antriebsraupe antreibenden Linearmotors, welcher insbesondere ortsfest bezüglich der Lastenbaugruppe vorgesehen ist. Jeder der Läufer kann zur gemeinsamen Bewegung mit der jeweiligen Antriebsraupe angeordnet sein und in der Antriebsraupe ausgebildet sein, wobei der Läufer in der Antriebsraupe angeordnete und zur gemeinsamen Bewegung mit der Antriebsraupe ausgebildete Permanentmagnete aufweisen kann.

Unter einem ortsfest bezüglich der Lastenbaugruppe vorgesehen Linearmotor ist insbesondere ein Linearmotor zu verstehen, dessen Stator ortsfest bezüglich der Lastenbaugruppe angeordnet ist und dessen Läufer sich relativ zu der Lastenbaugruppe bewegen kann.

Eine Lastenbaugruppe kann eine Antriebsraupe mit Läufer oder kann mehr als eine Antriebsraupe mit Läufer umlaufend tragen. Ein Stator kann einer Antriebsraupe mit Läufer oder kann mehr als einer Antriebsraupe mit Läufer als Umlaufbewegungsantrieb zugeordnet sein. Daher kann eine Lastenbaugruppe einen Linearmotor, mit genau einem oder mehreren Läufern, oder eine Mehrzahl von Linearmotoren mit einer Mehrzahl von Läufern tragen, wobei bevorzugt die Anzahl der an der Lastenbaugruppe zur Umlaufbewegung gehaltenen Antriebsraupen gleich der Anzahl an Statoren ist. Bevorzugt laufen die mehreren an einer Lastenbaugruppe umlaufendbeweglich aufgenommenen Antriebsraupen in zueinander parallelen Umlaufbahnen an der gemeinsamen Lastenbaugruppe um. Der oben genannte Lastenaufnahmeraum, wie Kabine oder Container kann relativ zur Lastenbaugruppe beweglich oder unbeweglich mit der Lastenbaugruppe verbunden sein. Im Falle eines unbeweglich mit der Lastenbaugruppe verbundenen und von dieser umfassten Lastenaufnahmeraums kann die Antriebsraupe derart um die Lastenbaugruppe umlaufen, dass sie auch um den Lastenaufnahmeraum umläuft.

Umfasst das Raupenfahrzeug eine Mehrzahl von Antriebsraupen, so verteilt sich die auf die Raupenaufstandsfläche des Untergrunds bzw. der Fahrbahnanordnung übertragene Eigenlast und gegebenenfalls auch eine zugeladene Nutzlast des Raupenfahrzeugs auf die einzelnen Antriebsraupen.

Umfasst das Raupenfahrzeug eine Mehrzahl von Lastenbaugruppen, so sorgt die Gesamtheit der Lastenbaugruppen für die oben genannte Übertragung wenigstens der Eigenlast des Raupenfahrzeugs über die dann wenigstens eine Antriebsraupe auf die Raupenaufstandsfläche des Untergrunds bzw. der Fahrbahnanordnung, mit welcher die Antriebsraupe oder die Antriebsraupen in Kontakt sind.

Falls der Lastenaufnahmeraum senkrecht zur Umlaufbahn bezüglich der Umlaufbahn der Antriebsraupe versetzt ist, ist bevorzugt die von einer Außenfläche der Antriebsraupe umgebene Fläche größer als eine Querschnittsfläche des Lastenaufnahmeraums in einer Schnittebene, welche parallel zur Umlaufbahn der Antriebsraupe verläuft. Dies gilt bevorzugt für alle derartigen Querschnittsflächen des Lastenaufnahmeraums. Dann kann nämlich die Außenfläche der Antriebsraupe an mehr als zwei Seiten des Raupenfahrzeugs eine Außenseite des Raupenfahrzeugs bilden, was den oben erwähnten Wechsel von zu befahrenden unterschiedlich geneigten Abschnitten, insbesondere zwischen horizontalen und vertikalen Abschnitten, einer Fahrbahnanordnung erheblich erleichtert. Der oben erwähnte Bezug "senkrecht zur Umlaufbahn der Antriebsraupe" oder/und "parallel zur Umlaufbahn der Antriebsraupe" kann sich nur auf einen Abschnitt der Umlaufbahn der Antriebsraupe beziehen, bezieht sich jedoch bevorzugt auf die gesamte Umlaufbahn der Antriebsraupe.

Unabhängig davon, ob der Lastenaufnahmeraum senkrecht zur Umlaufbahn bezüglich der Umlaufbahn der Antriebsraupe versetzt ist oder nicht, kann die Außenfläche der Antriebsraupe an mehr als zwei Seiten des Raupenfahrzeugs eine Außenseite des Raupenfahrzeugs bilden, sodass der oben erwähnte Wechsel von zu befahrenden unterschiedlich geneigten Abschnitten, insbesondere zwischen horizontalen und vertikalen Abschnitten, einer Fahrbahnanordnung erheblich erleichtert ist. Insbesondere kann Antriebsraupe einen Lastenaufnahmeraum umlaufen.

Um die auf einzelne Segmente der Antriebsraupe wirkenden Kräfte zu reduzieren, ist es von Vorteil, die zwischen dem Stator und dem in der Antriebsraupe angeordneten Läufer gleichzeitig wirkenden Kräfte auf einen möglichst langen Abschnitt der Antriebsraupe zu verteilen, dies wird dadurch erreicht, dass die Antriebsraupe einen Aufstandsflächenkontakttrum und zwei Umlenktrume umfasst, wobei jeder Umlenktrum entlang der Umlaufbahn direkt an den Aufstandsflächenkontakttrum anschließt; und wobei der Stator längs wenigstens eines Abschnitts der Umlaufbahn hintereinander angeordnete Statorwicklungen zur Erzeugung eines Magnetfelds bei Bestromung der Statorwicklungen aufweist, welche entlang wenigstens eines der Umlenktrume oder/und entlang des Aufstandsflächenkontakttrums oder/und entlang eines vom Aufstandsflächenkontakttrum verschiedenen und zwischen den Umlenktrumen angeordneten weiteren Trum der Antriebsraupe oder/und in einer besonders bevorzugten Ausführungsform entlang der gesamten Umlaufbahn angeordnet sind.

Die Erfindung stellt ferner ein Fahrzeugsystem bereit, umfassend ein Raupenfahrzeug, wie es vorzugsweise oben beschrieben worden ist; und eine Fahrbahnanordnung; wobei das Raupenfahrzeug umfasst: eine Lastenbaugruppe; eine Antriebsraupe mit zur gemeinsamen Bewegung mit der Antriebsraupe ausgebildeten Permanentmagneten; wobei die Fahrbahnanordnung eine Raupenaufstandsfläche aufweist, welche zum Anlageeingriff mit der Antriebsraupe ausgebildet ist, also dafür eingerichtet ist, mit der Antriebsraupe in Berührkontakt zu treten. Die Fahrbahnanordnung umfasst bevorzugt eine entlang der Raupenaufstandsfläche verlaufende magnetisierbare erste Trageanordnung, wobei die Permanentmagnete und die erste Trageanordnung derart ausgebildet sind, dass zwischen den Permanentmagneten und der ersten Trageanordnung durch eine magnetische Wechselwirkung zwischen den Permanentmagneten und der ersten Trageanordnung eine wechselseitig anziehende Magnetkraft wirkt. Durch das Vorsehen einer magnetisierbaren ersten Trageanordnung kann ein Bewegungspfad für das Raupenfahrzeug vorbestimmt werden. Wird ein oben beschriebenes Raupenfahrzeug verwendet, so werden Statorwicklungen nur in dem Raupenfahrzeug und nicht entlang der gesamten Fahrbahnanordnung, wie es beispielsweise bei der Magnetschwebebahn "Transrapid" der Fall ist, vorgesehen, sodass Kosten reduziert werden können und weniger Kupfer für die Ausbildung des Linearmotors notwendig ist. Die Fahrbahnanordnung kann äußerst einfach gestaltet sein und kann nachträglich beispielsweise in bereits bestehenden Aufzugschächten kostengünstig installiert werden. An der Fahrbahnanordnung können Fangvorrichtungen, wie beispielsweise Haken, Sägezahnprofile, Schienengegenstücke oder Ähnliches angeordnet sein, welche beim Lösen der Antriebsraupe von der Raupenaufstandsfläche in entsprechend ausgebildete Aufnahmeelemente für die Fangvorrichtungen am Raupenfahrzeug eingreifen und somit einen Absturz des Raupenfahrzeugs verhindern.

Der Antrieb des Raupenfahrzeugs ist vorzugsweise unabhängig von der Fahrbahnanordnung vorgesehen, dies erlaubt die Kosten für eine nachträgliche Installation der Fahrbahnanordnung, z. B. in einem Aufzugschacht, besonders niedrig zu halten.

Die Raupenaufstandsfläche kann zumindest abschnittsweise bezogen auf ein Lot schräg oder/und zumindest abschnittsweise vertikal oder/und zumindest abschnittsweise "im Überhang" (also dergestalt, dass das Raupenfahrzeug von unten die Raupenaufstandsfläche kontaktiert) verlaufen. Um derartige Raupenaufstandsflächen befahren zu können ist es von Vorteil, wenn die Magnetkraft betragsmäßig wenigstens größer als 50%, bevorzugt 75%, besonders bevorzugt 100%, höchstbevorzugt 150% oder 250% einer Gewichtskraft eines zulässigen Gesamtgewichts des Raupenfahrzeugs ist, wobei zur Befahrung von im Überhang verlaufenden Raupenaufstandsflächen die Magnetkraft betragsmäßig wenigstens größer als 100% des Raupenfahrzeugs sein muss.

Das Raupenfahrzeug ist vorzugsweise dazu ausgebildet, um mindestens eine, vorzugsweise eine Mehrzahl von oder alle, aus den im vorangehenden Absatz erwähnten Raupenaufstandsflächen zu befahren. Ebenso ist das Raupenfahrzeug vorzugsweise dazu ausgebildet, eine horizontal verlaufende Raupenaufstandsfläche zu befahren.

Um die Bewegung des Raupenfahrzeugs in dem Fahrzeugsystem zu führen und zu stabilisieren, kann die Fahrbahnanordnung eine Fahrrinne aufweisen, deren Verlauf einen Bewegungspfad des Raupenfahrzeugs entlang der Raupenaufstandsfläche zumindest abschnittsweise definiert.

Hierbei kann eine die Bewegung des Raupenfahrzeugs stabilisierende Selbstzentrierung oder/und ein in Querrichtung der Fahrrinne wirkender Formschluss des Raupenfahrzeugs in der Fahrrinne erreicht werden, wenn die Fahrrinne sich in ihrer Tiefenrichtung in Richtung auf den Fahrrinnengrund hin verjüngt.

Um einen Vortrieb des Raupenfahrzeugs auf der Raupenaufstandsfläche möglichst schlupffrei zu gestalten, weist bevorzugt die Fahrbahnanordnung an der Raupenaufstandsfläche angeordnete Vorsprünge oder/und Vertiefungen, und weist ebenso bevorzugt die Antriebsraupe an einer Aufstandsflächenkontaktfläche der Antriebsraupe angeordnete Vertiefungen oder/und Vorsprünge derart auf, dass bei Berührkontakt der Raupenaufstandsfläche mit der Aufstandsflächenkontaktfläche ein Formschluss ausgebildet ist, welcher im Wesentlichen parallel zu einem der Aufstandsflächenkontaktfläche zugeordneten Abschnitt der Umlaufbahn wirkt. Die Aufstandsflächenkontaktfläche ist insbesondere ein Abschnitt einer Außenfläche der Antriebsraupe, welche mit der Raupenaufstandsfläche in Kontakt ist, also etwa die Außenfläche des Aufstandsflächenkontakttrums. Die Vorsprünge können derart angeordnet sein, dass in einem von einer Vertiefung überspannten Raum mindestens ein Vorsprung oder eine Mehrzahl von Vorsprüngen angeordnet ist. Vorzugsweise ist mindestens einer der, eine Mehrzahl der oder sind alle Vorsprünge federnd gelagert und in eine Position vorgespannt, in welcher sie in die Vertiefungen eingreifen. Bevorzugt können die Vorsprünge entgegen ihrer Vorspannrichtung zurückweichen, sodass sie im zurückgewichenen Zustand die Aufstandsflächenkontaktfläche, welche an der Raupenaufstandsfläche insbesondere flächig und vorzugsweise nicht nur an den Vorsprüngen selbst anliegt, nicht durchdringen und von ihr begrenzt sind.

In einer besonders bevorzugten Ausführungsform umfasst die Fahrbahnanordnung einen ortsfesten Fahrabschnitt, welcher einen Abschnitt der Raupenaufstandsfläche und einen Abschnitt der ersten Trageanordnung umfasst. Weiter umfasst die Fahrbahnanordnung in dieser besonders bevorzugten Ausführungsform einen Transportabschnitt, welcher einen an den Fahrabschnitt zumindest zeitweise angrenzenden weiteren Abschnitt der Raupenaufstandsfläche und einen weiteren Abschnitt der ersten Trageanordnung aufweist. Dabei sind der weitere Abschnitt der Raupenaufstandsfläche und der weitere Abschnitt der ersten Trageanordnung ortsfest bezüglich des Transportabschnitts angeordnet. Weiterhin ist der Transportabschnitt zusammen mit dem weiteren Abschnitt der ersten Trageanordnung und dem weiteren Abschnitt der Raupenaufstandsfläche bezüglich des Fahrabschnitts beweglich angeordnet. Dies ermöglicht, dass in dem Fahrzeugsystem das Raupenfahrzeug von dem Fahrabschnitt auf den Transportabschnitt fährt und dann zusammen mit dem Transportabschnitt bewegt wird, wobei die Bewegung in eine Parkposition des Transportabschnitts führen kann oder zu einer Übergabeposition des Transportabschnitts führen kann, in welcher das Raupenfahrzeug den Transportabschnitt verlassen kann und seinen Weg entlang eines weiteren Abschnitts der Raupenaufstandsfläche fortführen kann. Dieser weitere Abschnitt der Raupenaufstandsfläche kann ein Teil eines weiteren, insbesondere ortsfesten, Fahrabschnitts sein, welcher diesen Abschnitt der Raupenaufstandsfläche und einen Abschnitt einer Trageanordnung, insbesondere der ersten Trageanordnung, umfasst. Der Fahrabschnitt ist insbesondere ortsfest bezüglich einer Gebäudewand oder einer gebäudefesten Anordnung.

Die Position des Transportabschnitts, wenn das Raupenfahrzeug von dem Fahrabschnitt auf den Transportabschnitt fährt, kann eine erste Position des Transportabschnitts sein, welche insbesondere mit der oder einer Übergabeposition in dem Sinne identisch ist, dass das Raupenfahrzeug den Transportabschnitt entlang seines Bewegungspfads überquert, wenn der Transportabschnitt nicht versetzt wird. Die erste Position, die Parkposition oder/und die Übergabeposition sind vorzugsweise jeweils Ruhepositionen des Transportabschnitts, in welchen der Transportabschnitt sich nicht bewegt.

Insbesondere ist der Transportabschnitt dafür eingerichtet, alleine oder/und mit dem daran angeordneten Raupenfahrzeug durch eine Versatzeinrichtung translatorisch oder/und rotatorisch versetzt zu werden, vorzugsweise verschoben zu werden, wodurch der Transportabschnitt, mit dem Raupenfahrzeug beladen oder unbeladen, an einen gewünschten Ort in dem Transportsystem bewegt werden kann.

Der Transportabschnitt kann durch die Versatzeinrichtung rotatorisch versetzt werden, indem eine Rotation des Transportabschnitts um eine Rotationsachse ausgeführt wird. Diese Rotationsachse des Transportabschnitts ist vorzugsweise parallel zu dem Bewegungspfad für das Raupenfahrzeug ausgerichtet, wobei hierfür der Verlauf des Bewegungspfads betrachtet wird, wenn der Transportabschnitt sich in der ersten Position oder/und der Übergabeposition befindet. Die Rotationsachse des Transportabschnitts ist vorzugsweise lotrecht, also in Lotrichtung, ausgerichtet.

Die Fahrbahnanordnung ist insbesondere an einer Wandfläche eines Gebäudes, insbesondere in einem schacht- oder tunnelartigen Raum, beispielsweise einem Aufzugsschacht angeordnet. Die Rotationsachse des Transportabschnitts kann in dem schacht- oder tunnelartigen Raum oder auch außerhalb dieses schacht- oder tunnelartigen Raums, beispielsweise in seiner Wand, verlaufen. Der Verlauf der Rotationsachse des Transportabschnitts außerhalb dieses schacht- oder tunnelartigen Raums wird bevorzugt, da hierdurch das Raupenfahrzeug durch Versatz des Transportabschnitts aus dem schacht- oder tunnelartigen Raum herausbewegt wird, sodass der schacht- oder tunnelartige Raum nicht durch das Raupenfahrzeug, z.B. während einer Beladung des Raupenfahrzeus, blockiert wird.

Um einen oder mehrere Transportabschnitte, sei es mit dem Raupenfahrzeug beladen oder sei es unbeladen, für eine weitere Verwendung zu parken, kann das Fahrzeugsystem ferner einen gegenüber dem Fahrabschnitt versetzten oder/und versetzbaren Aufnahmeraum umfassen, welcher dafür ausgebildet ist, einen Transportabschnitt aufzunehmen oder welcher einen Transportabschnitt umfasst. Vorzugsweise ist der Aufnahmeraum orthogonal zur Bewegungstrajektorie des Raupenfahrzeugs auf dem Fahrabschnitt versetzt oder versetzbar, besonders bevorzugt innerhalb einer Ebene.

Um zu ermöglichen, dass ein Raupenfahrzeug die Fahrbahnanordnung entlang unterschiedlicher Bewegungspfade oder eine Mehrzahl von Raupenfahrzeugen die Fahrbahnanordnung möglichst störungsfrei befahren können, umfasst die Fahrbahnanordnung bevorzugt eine zweite Trageanordnung, welche bezüglich der ersten Trageanordnung versetzt angeordnet ist, vorzugsweise orthogonal zur Verlaufsrichtung der ersten Trageanordnung versetzt, wobei insbesondere die Permanentmagnete und die zweite Trageanordnung derart ausgebildet sind, dass zwischen den Permanentmagneten und der zweiten Trageanordnung durch eine magnetische Wechselwirkung zwischen den Permanentmagneten und der zweiten Trageanordnung eine wechselseitig anziehende Magnetkraft wirkt. Vorzugsweise verläuft entlang der zweiten Trageanordnung auch ein Abschnitt der Raupenaufstandsfläche, welche insbesondere zum Anlageeingriff mit der Antriebsraupe ausgebildet ist, also dafür eingerichtet ist, mit der Antriebsraupe in Berührkontakt zu treten.

Um eine besonders effiziente Ausnutzung von schacht- oder tunnelartigen Räumen zu erlauben, kann die erste Trageanordnung an einer ersten Seite der Fahrbahnanordnung und die zweite Trageanordnung an einer der ersten Seite entgegengesetzt angeordneten zweiten Seite der Fahrbahnanordnung angeordnet sein. Ebenso kann die erste Trageanordnung und die zweite Trageanordnung an einer gemeinsamen Seite der Fahrbahnanordnung angeordnet sein, vorzugsweise in einer gemeinsamen Erstreckungsebene, wie etwa einer gemeinsamen Wandfläche, was insbesondere einen einfachen Übergang von einer Bewegung entlang eines Pfads entlang der ersten Trageanordnung zu einer Bewegung entlang eines Pfads entlang der zweiten Trageanordnung des Raupenfahrzeugs ermöglicht, wobei diese Pfade insbesondere auch entlang der jeweiligen Raupenaufstandsflächen verlaufen.

Vorzugsweise umfasst der Transportabschnitt an einer ersten Seite einen primären Abschnitt der Raupenaufstandsfläche und einen primären Abschnitt der Trageanordnung und an einer der ersten Seite entgegengesetzt angeordneten zweiten Seite einen sekundären Abschnitt der Raupenaufstandsfläche und einen sekundären Abschnitt der Trageanordnung. Dies ist besonders vorteilhaft, wenn die Rotationsachse des Transportabschnitts außerhalb eines schacht- oder tunnelartigen Raums, beispielsweise in seiner Wand verläuft, da bei einer Rotation um 180° ein mit einem Raupenfahrzeug belegter Abschnitt der Fahrbahnanordnung (oder ein leerer Abschnitt der Fahrbahnanordnung) aus dem schacht- oder tunnelartigen Raum herausgedreht wird während gleichzeitig ein neuer Abschnitt der Fahrbahnanordnung seinen Platz einnimmt, wobei dieser Abschnitt, je nach Bedarf leer oder durch ein Raupenfahrzeug besetzt sein kann.

In einer besonders bevorzugten Ausführungsform wird das oben beschriebene Fahrzeugsystem zum Transport von Lasten in oder/und an einem Gebäude verwendet, wobei die Fahrbahnanordnung an oder/und in einem Gebäude angeordnet ist; und wobei das Raupenfahrzeug eine Fahrstuhlkabine oder/und eine Lastenaufnahmeanordnung umfasst. Gegenüber üblichen Fahrstühlen ist die Förderhöhe des Fahrzeugsystems nicht durch ein Gewicht eines zum Betrieb des Aufzugs notwendigen Aufzugsseils bei gegebener Motorleistung des Fahrstuhls beschränkt, da das zu bewegende Gewicht des Raupenfahrzeugs unabhängig von der Förderhöhe ist.

Das Fahrzeugsystem kann insbesondere ferner eine Mehrzahl von Raupenfahrzeugen umfassen, welche gleichzeitig entlang eines entlang der Raupenaufstandsfläche führenden gemeinsamen Bewegungspfads bewegt werden, wobei insbesondere der Bewegungspfad durchgehend ausgebildet ist, und wobei vorzugsweise ein Abstand entlang des Bewegungspfads zwischen zwei der Raupenfahrzeuge variabel ist bzw. variiert wird. Dadurch dass die Fahrbahnanordnung im Wesentlichen als ein passives Element ausgebildet ist, kann sie, ähnlich wie eine Schiene im Schienenverkehr, von der Mehrzahl von Raupenfahrzeugen befahren werden, da insbesondere die oben beschriebenen Raupenfahrzeuge im Gegensatz zu üblichen Aufzugskabinen, einen eigenen raupenfahrzeugfesten Antrieb aufweisen. Dies erlaubt es, einen einzelnen Aufzugschacht mit einer Mehrzahl von Raupenfahrzeugen und somit einer Mehrzahl an Aufzugskabinen zu verwenden, was zu einer signifikanten Reduzierung der Bauwerkkosten durch die Einsparung von Aufzugschächten bei hoher Beförderungskapazität des Fahrzeugsystems führt.

Wenngleich sich durch die Anordnung von Permanentmagneten zur gemeinsamen Bewegung mit der Antriebsraupe und bevorzugt sogar in deren Kettengliedern besondere Möglichkeiten im Zusammenspiel mit einem ferromagnetischen Untergrund ergeben, kann das Raupenfahrzeug grundsätzlich jeden Untergrund befahren. Dieser kann sogar geneigt sein, solange die Haftung der wenigstens einen Antriebsraupe am jeweiligen Untergrund größer ist als die Hangabtriebskraft.

Bevorzugt sind die Permanentmagnete in einem Abschnitt der Kettenglieder angeordnet, welcher dann, wenn sich das Kettenglied im Aufstandsflächenkontakttrum befindet, im Wesentlichen parallel zum Untergrund verläuft. Um an einem Untergrund mit ferromagnetischem Trageabschnitt einen Luftspalt zwischen den Permanentmagneten und dem Trageabschnitt so gering wie möglich zu halten, können die Permanentmagnete bezogen auf ihre Umlaufbahn nach radial außen freiliegend an der wenigstens einen Antriebsraupe, insbesondere an deren Kettengliedern, angeordnet sein.

Ferner können die Permanentmagnete eine Kontaktfläche der Antriebsraupe mit dem zu befahrenden Untergrund ausbilden oder zu deren Ausbildung zumindest beitragen.

Vorzugsweise sind bei Fahrt oder Stand auf ebenem Untergrund Permanentmagnete, welche sich zumindest in einem Abschnitt des Aufstandsflächenkontakttrums oder im gesamten Aufstandsflächenkontakttrum befinden, entlang einer ersten Ebene angeordnet. Vorzugsweise verläuft eine magnetische Polarisationsrichtung mindestens eines der, vorzugsweise aller, Permanentmagnete, welche sich zumindest in einem Abschnitt des Aufstandsflächenkontakttrums oder im gesamten Aufstandsflächenkontakttrum befinden, im Wesentlichen quer, bevorzugt senkrecht, zu der ersten Ebene. In einer bevorzugten Ausführungsform erstreckt sich der Stator des Linearmotors im Wesentlichen parallel, oder parallel, zu dieser ersten Ebene. Alternativ oder zusätzlich kann eine Mehrzahl oder alle der Statoren des Linearmotors entlang einer zweiten Ebene angeordnet sein, welche sich im Wesentlichen parallel, oder parallel, zu der ersten Ebene erstreckt. Die erste Ebene kann, insbesondere bei einer Fahrt oder einem Stand auf einem ebenem Untergrund oder einer ebenen Fahrbahnanordnung, parallel zu der Raupenaufstandsfläche des Untergrunds bzw. der Fahrbahnanordnung verlaufen, wobei die Raupenaufstandsfläche dann im Wesentlichen eine Ebene ist, bevorzugt eine Ebene ist.

Aufgrund der magnetisch-induktiven Wechselwirkung zwischen den Permanentmagneten der Antriebsraupe und dem Stator bzw. den einzelnen Statorwicklungen kann der durch Antriebsraupe und Stator gebildete Linearmotor auch als "Linearbremse" oder als Lineargenerator zum rekuperativen Verzögern des Raupenfahrzeugs verwendet werden. Eine Linearbremse kann durch einfaches jeweiliges Kurzschließen phasengleicher Statorwicklungen bewirkt werden. Beim rekuperativen Bremsen wird der von den Permanentmagneten in den Statorwicklungen induzierte Strom in das Stromnetz oder/und in eine elektrische Energiequelle zurückgespeist. Der Stromrichter ist dann zur Rekuperation von Bremsenergie ausgebildet.

Zur Verschleißminderung an der wenigstens einen Antriebsraupe dann, wenn es in einem Fahrbetrieb auf eine magnetische Wechselwirkung nicht ankommt, kann das Raupenfahrzeug eine Hebevorrichtung aufweisen, welche mit einem rahmenseitigen Wirkende an der Lastbaugruppe, aus Stabilitätsgründen insbesondere an deren Rahmen, abgestützt ist, und deren anderes, raupenseitiges Wirkende zur Übertragung einer Hubkraft auf einen Abschnitt des Aufstandsflächenkontakttrums ausgebildet ist. Somit ist die Hebevorrichtung dazu ausgebildet, einen Abschnitt des Aufstandsflächenkontakttrums vom augenblicklich befahrenen Untergrund unter Bildung eines Spalts zwischen Untergrund und dem angehobenen Abschnitt des Aufstandsflächenkontakttrums anzuheben. Die Hebevorrichtung kann einen mechanischen, elektromechanischen, magnetischen oder/und fluidbetätigten Aktuator aufweisen, welcher beispielsweise auf einen Abschnitt einer Raupenführungsstruktur orthogonal zu ihrer Umlaufbahn verlagern kann.

Wird in der Anmeldung von einem bezogen auf eine Bezugsrichtung abwärts gelegenem Abschnitt eines Elements oder einem bezogen auf eine Bezugsrichtung abwärts gelegenem Ende eines Elements gesprochen, so verläuft eine Betrachtungsrichtung zwischen dem gewählten Referenzpunkt in dem Element und dem bezogen auf die Bezugsrichtung abwärts gelegenem Abschnitt oder dem bezogen auf die Bezugsrichtung abwärts gelegenem Ende des Elements parallel zu und gleichgerichtet mit der Bezugsrichtung.

Wird in der Anmeldung von einem bezogen auf eine Bezugsrichtung aufwärts gelegenem Abschnitt eines Elements oder einem bezogen auf eine Bezugsrichtung aufwärts gelegenem Ende eines Elements gesprochen, so verläuft eine Betrachtungsrichtung zwischen dem gewählten Referenzpunkt in dem Element und dem bezogen auf die Bezugsrichtung aufwärts gelegenem Abschnitt oder dem bezogen auf die Bezugsrichtung aufwärts gelegenem Ende des Elements antiparallel zu der Bezugsrichtung und entgegengesetzt zu ihr gerichtet.

Die Erfindung wird im Folgenden anhand von in den beigefügten Figuren dargestellten Ausführungsformen erläutert, es zeigen:
- Figur 1: eine erfindungsgemäße Ausführungsform eines Raupenfahrzeugs;
- Figur 2: einen Abschnitt einer Antriebsraupe;
- Figur 3a: einen Ausschnitt einer erfindungsgemäßen Ausführungsform eines Raupenfahrzeugs in grobschematischer Darstellung mit einem Neutralisierungstrum;
- Figur 3b: eine Vergrößerung des Ausschnitts F3b aus Figur 3a;
- Figur 4: eine erfindungsgemäße Ausführungsform eines Raupenfahrzeugs in grobschematischer Darstellung;
- Figur 5a: eine erfindungsgemäße Ausführungsform eines Raupenfahrzeugs;
- Figur 5b: das Raupenfahrzeug aus Figur 5a mit gedrehten Halteplattformen;
- Figur 6: eine Sicherung der Antriebsraupe;
- Figur 7a: eine erfindungsgemäße Ausführungsform eines Raupenfahrzeugs in grobschematischer Darstellung;
- Figur 7b: eine Vergrößerung des Ausschnitts F7b aus Figur 7a;
- Figur 8a: eine erfindungsgemäße Ausführungsform eines Raupenfahrzeugs in grobschematischer Darstellung;
- Figur 8b: eine Vergrößerung des Ausschnitts F8b aus Figur 8a, wobei ein Perspektivenwechsel vorgenommen worden ist;
- Figur 8c: eine Vergrößerung des Ausschnitts F8c aus Figur 8a, wobei ein Perspektivenwechsel vorgenommen worden ist;
- Figur 9: eine Modifikation des Raupenfahrzeugs aus Figur 1 in grobschematischer Darstellung;
- Figur 10: eine erfindungsgemäße Ausführungsform eines Fahrzeugsystems;
- Figur 11: einen Ausschnitt des Fahrzeugsystems aus Figur 10;
- Figur 12a: einen Übergang von einem vertikal verlaufenden Abschnitt einer Raupenaufstandsfläche zu einem horizontal verlaufendem Abschnitt einer Raupenaufstandsfläche mit einem Raupenfahrzeug in einer ersten Position;
- Figur 12b: den Übergang aus Figur 12a mit dem Raupenfahrzeug in einer zweiten Position;
- Figur 13: eine Ansicht einer erfindungsgemäßen Verwendung des Fahrzeugsystems aus Figur 10;
- Figur 14a: eine Ansicht einer erfindungsgemäßen Verwendung eines Fahrzeugsystems;
- Figur 14b: eine Vergrößerung des Ausschnitts F14b aus Figur 14a, wobei ein Perspektivenwechsel vorgenommen worden ist
- Figur 14c: eine Vergrößerung des Ausschnitts F14c aus Figur 14a, wobei ein Perspektivenwechsel vorgenommen worden ist;
- Figur 15: eine Ansicht einer erfindungsgemäßen Verwendung eines Fahrzeugsystems, und
- Figur 16: eine erfindungsgemäße Ausführungsform eines Fahrzeugsystems.

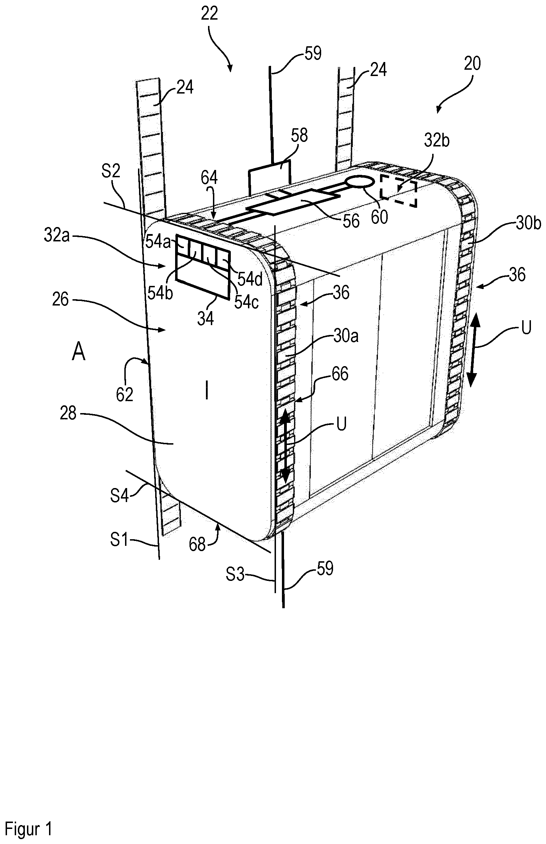

Figur 1 zeigt ein Raupenfahrzeug 20, welches als eine Aufzugskabine ausgebildet ist. Die Aufzugskabine ist eine Ausführungsform eines Lastenaufnahmeraums. Das Raupenfahrzeug 20 bewegt sich entlang einer Fahrbahnanordnung 22, welche mit zwei Fahrrinnen 24 ausgebildet ist, wobei jedoch auch Ausführungsformen mit nur einer Fahrrinne 24 oder mit mehr als zwei Fahrrinnen 24 ebenso angedacht sind. Das Raupenfahrzeug 20 umfasst eine Lastenbaugruppe 26, welche ein äußeres Gehäuse 28 sowie einen darin nicht gezeigten Fahrzeugrahmen umfasst. Ferner umfasst das Raupenfahrzeug 20 zwei Antriebsraupen 30a, 30b, welche jeweils längs ihrer Umlaufbahn U um die Lastenbaugruppe 26 herum beweglich gehalten sind und die Lastenbaugruppe jeweils umlaufen. Es wird auch an Ausführungsformen gedacht, in denen die Raupenketten 30a, 30b komplett über, neben oder unter dem Gehäuse 28 angeordnet sind. Das Raupenfahrzeug 20 umfasst ferner einen Linearmotor 32a, vorzugsweise für jede Antriebsraupe 30a, 30b einen. In der Figur 1 ist übersichtshalber nur ein Linearmotor 32a für die Antriebsraupe 30a gezeigt, die Beschreibung des Linearmotors 32a ist auch für einen zweiten, die Antriebsraupe 30b antreibenden Linearmotor 32b mit entsprechenden Bauteilen und für seine Wechselwirkung mit der zweiten Antriebsraupe 30b entsprechend anzuwenden, wobei der Linearmotor 32b nicht in den Figuren dargestellt ist. Ebenso ist die Beschreibung der Antriebsraupe 30a, die Beschreibung ihrer Trume und die Beschreibung ihrer Wechselwirkung mit anderen Teilen des Raupenfahrzeugs oder/und mit Teilen des weiter unten beschriebenen Fahrzeugsystems auch für die Antriebsraupe 30b, ihre Trume und ihre Wechselwirkung mit anderen Teilen des Raupenfahrzeugs oder/und mit Teilen das weiter unten beschriebene Fahrzeugsystem zu verwenden. Es ist jedoch auch möglich, dass nur die Antriebsraupe 30a durch einen Linearmotor angetrieben wird. Jeder der Linearmotoren 32a, 32b kann insbesondere in Bezug auf die Geschwindigkeit seines Läufers und die Bewegungsrichtung seines Läufers geregelt und/gesteuert werden. Jede der in dieser Anmeldung beschriebenen Antriebsraupen kann wie die Antriebsraupe 30a oder 30b ausgebildet sein. Die Linearmotoren 32a, 32b können einen Linear Permanent Magnet Synchron Motor ausbilden.

Sofern in dieser Anmeldung von Regelungs- oder/und Steuerungsvorgängen gesprochen wird, so können diese durch eine nicht gezeigte Regelungsvorrichtung oder/und Steuerungsvorrichtung ausgeführt werden, beispielsweise einen Mikrocontroller mit angeschlossener Leistungselektronik. Die Regelungsvorrichtung kann ortsfest an der Lastenbaugruppe 26 angeordnet sein. Die zur Regelung oder/und Steuerung notwendige Verkabelung der jeweiligen Baugruppen oder/und Elementen ist zur Wahrung der Übersicht in den Figuren nicht gezeigt, diese kann jedoch vom Fachmann im Rahmen seines allgemeinen Fachkönnens und -wissens vorgenommen werden.

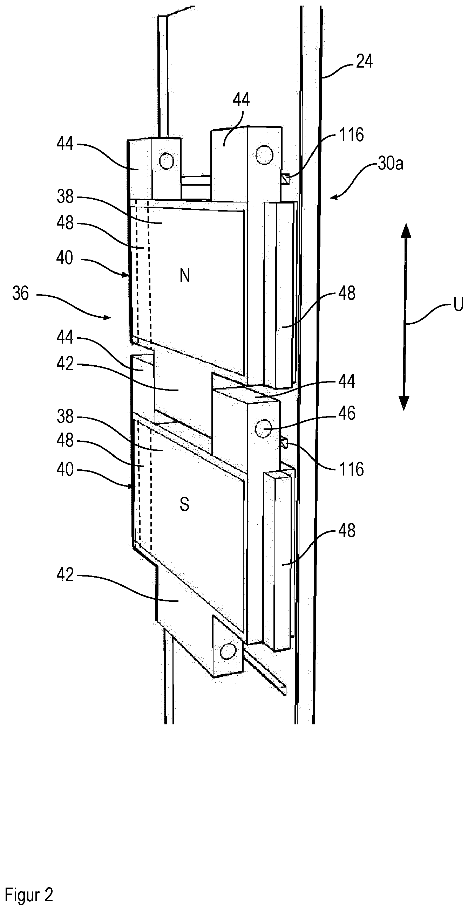

Der Linearmotor 32a umfasst einen Stator 34, welcher ortsfest bezüglich des Gehäuses 28 an dem Fahrzeugrahmen angeordnet ist. Ein Läufer 36 des Linearmotors 32a wird durch Permanentmagnete 38 (s. Fig. 2), welche insbesondere Seltenerde-Permanentmagnete sind, ausgebildet. Die Permanentmagnete 38 sind in der Antriebsraupe 30a zur gemeinsamen Bewegung mit der Antriebsraupe 30a angeordnet.

Wie in Figur 2 dargestellt kann jeder der Antriebsraupen 30a, 30b als eine Antriebskette aus einzelnen Kettengliedern 40 ausgebildet sein. Jedes Kettenglied umfasst vorzugsweise eine Zentrallasche 42 und zwei Seitenlaschen 44. Im zusammengebauten Zustand zu einer Antriebskette greift die Zentrallasche 42 zwischen zwei Seitenlaschen 44 eines entlang der Umlaufbahn U direkt benachbarten Kettengliedes (welcher in Figur 2 dargestellt sind) und wird durch einen Öffnungen in der Zentrallasche 42 und den zwei Seitenlaschen 44 durchdringenden Stift 46 drehbar an diesem direkt benachbarten Kettenglied gesichert. Diese Sicherung direkt benachbarter Kettenglieder 40 wird durchgeführt, bis die Antriebskette geschlossen ist.

In jedem Kettenglied 40 ist einer der Permanentmagneten 38 angeordnet, wobei zwei direkt entlang der Umlaufbahn U der Antriebskette benachbarte Kettenglieder 40 Permanentmagneten aufweisen, deren Polarisationsrichtungen in entgegengesetzte Richtungen alternierend ausgerichtet sind, wie dies durch die Angabe der magnetischen Pole Nord N und Süd S angedeutet ist. Die Polarisationsrichtung der Permanentmagneten verläuft im Wesentlichen senkrecht zu Umlaufbahn U und zeigt vorzugsweise in der Richtung vom Nordpol N zum Südpol S in einen Innenbereich I der Antriebsraupe oder in einen außerhalb der Antriebsraupe liegenden Außenbereich A der Antriebsraupe. Ferner kann an einem, einer Mehrzahl von, oder an allen Kettengliedern 40 jeweils mindestens ein Führungselement 48, vorzugsweise zwei Führungselemente 48, ausgebildet sein, an welchem später noch zu beschreibende und an der Lastenbaugruppe angeordnete Gleitnuten 50 oder/und Gleitfedern 52 angreifen können. Ein die Permanentmagnete 38 umgebendes Material des Kettengliedes 40 kann ein Metall oder ein anderes geeignetes Material sein. Alternativ kann das Kettenglied aus einem Permanentmagnet, insbesondere einem Seltenenerde-Permanentmagnet ausgebildet sein.

Der Stator 34 des Linearmotors 32a umfasst Statorwicklungen 54a bis 54d, welche mit einem als Frequenzwandler ausgebildeten Stromrichter 56 elektrisch leitend zur Bestromung der Statorwicklungen 54a bis 54d verbunden sind. Der Stromrichter 56 kann an der Lastenbaugruppe 26 angeordnet und befestigt sein. Bei Bestromung der Statorwidungen wird, wie es bekannt ist, ein Wechselmagnetfeld erzeugt, mittels welchem die den Läufer 36 ausbildenden Permanentmagnete 38 in Bewegung versetzt werden. Details hierzu der kann der Fachmann beispielsweise Boldea, I., & Nasar, S. (1997). Linear Electric Actuators and Generators. Cambridge: Cambridge University Press. doi:10.1017/CB09780511529641 entnehmen. Insbesondere kann die Geschwindigkeit des Linearmotor 32a bzw. 32b durch die Frequenz oder/und Phasenlage des durch den Stator 34 erzeugten Wechselmagnetfeldes geregelt oder/und gesteuert werden. Der Stator 34 kann als ein Primärteil und der Läufer 36 als ein Sekundärteil des Linearmotors 32a bezeichnet werden. Der Stromrichter 56 kann eine Regelungs- oder/und Steuerungsvorrichtung zur Regelung oder/und Steuerung der Bestromung umfassen, diese Regelungs- oder/und Steuerungsvorrichtung kann jedoch auch separat von dem Stromrichter 56 ausgebildet sein. Es wird bevorzugt, dass der Stator 32 mit seinen Statorwicklungen sich entlang der gesamten Umlaufbahn U der Antriebsraupe 30a erstreckt.

Der Stromrichter 56 wird über einen mit ihm elektrisch leitend zur Energieversorgung verbundenen Stromabnehmer 58, welcher beispielsweise über einen Schleifkontakt an einer Stromabnehmerschiene 59 Strom abnimmt, mit Energie versorgt. Alternativ oder zusätzlich kann das Raupenfahrzeug 20 einen mit dem Stromrichter elektrisch leitend zu dessen Energieversorgung verbundenen Energiespeicher 60 umfassen, sodass der Stromwandler 56 weiterhin mit Energie versorgt werden kann, auch wenn beispielsweise der Stromabnehmer 58 nicht an einer Stromabnehmerschiene 59 Strom abnimmt. Der Energiespeicher 60 kann eine Batterie oder/und einen Superkondensator umfassen oder durch diese einzeln oder in Kombination ausgebildet sein.

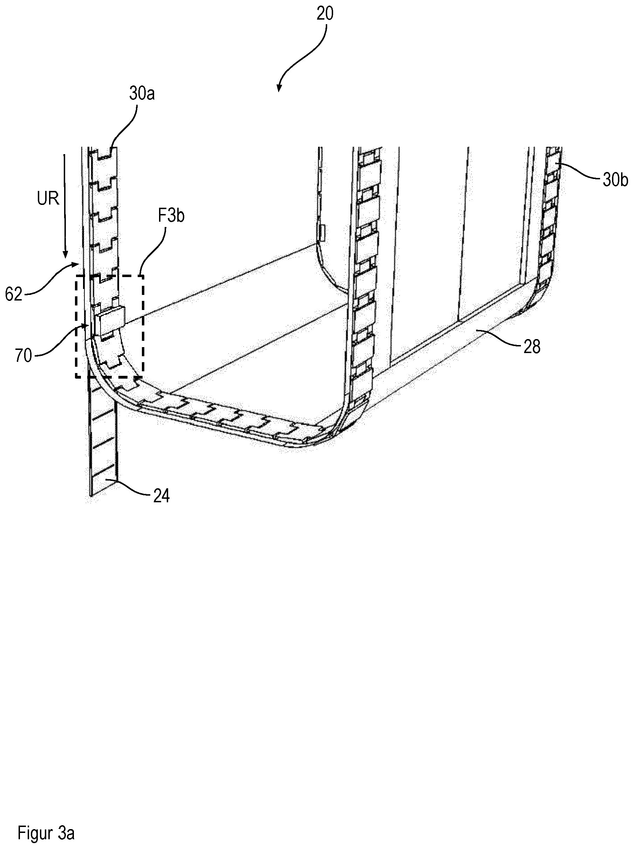

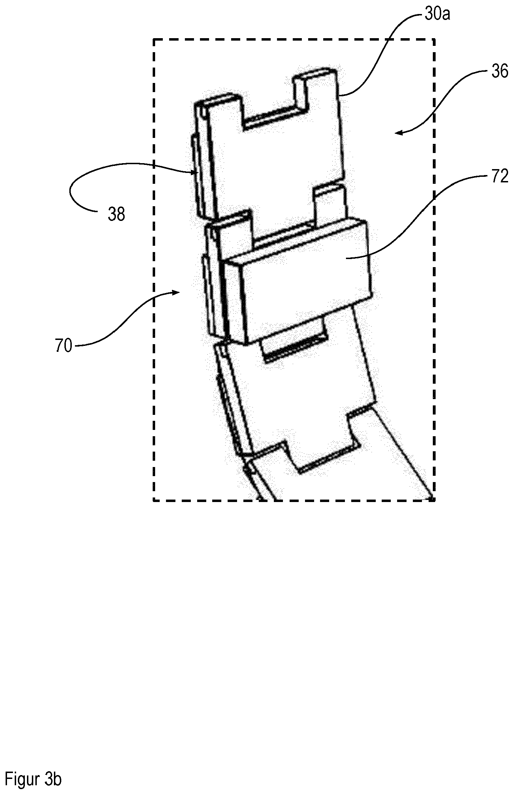

Wie in den Figuren 1, 3a und 3b zu sehen, umfasst die Antriebsraupe 30a einen Aufstandsflächenkontakttrum 62 mit zugeordneter Schmiegeebene S1 sowie drei Umlenktrume, einen Umlenktrum 64 mit zugeordneter Schmiegeebene S2, einen Umlenktrum 66 mit zugeordneter Schmiegeebene S3 und einen Umlenktrum 68 mit zugeordneter Schmiegeebene S4. Die Schmiegeebenen schmiegen sich an den jeweils zugeordneten Trum an und sind in der Figur 1 nur durch Linien angedeutet. Die Schmiegeebene S1 schneidet die Schmiegeebenen S2 und S4. Es ist auch möglich, den zwischen den zwei oben beschriebenen im Wesentlichen geraden Trumen liegenden gebogenen Abschnitt der Antriebsraupe 30a zu einem der Umlenktrume zu zählen. In einer bevorzugten jedoch nicht dargestellten Ausführungsform umfasst der Stator 34 längs der gesamten Umlaufbahn U der Antriebsraupe 30a hintereinander angeordnete Statorwicklungen zur Erzeugung eines Magnetfelds bei Bestromung der Statorwicklungen.

Der Stator 34 kann eine Mehrzahl an separat und unabhängig voneinander ansteuerbaren Statorabschnitten umfassen, wobei ein Statorabschnitt angesteuert wird, indem die in ihm angeordneten Statorwicklungen einzeln oder gemeinsam bestromt oder nicht bestromt werden. Die Entscheidung, ob Wicklungen im jeweiligen Statorabschnitt bestromt oder nicht bestromt werden, kann davon abhängen, welche Antriebskraft für den Antrieb der Antriebsraupe notwendig ist. Ebenso kann die Position der Antriebsraupe 30a, 30b entlang Ihrer Umlaufbahn relativ zur Lastenbaugruppe 26 mit einer Positionserfassungseinrichtung des Raupenfahrzeugs 20 bestimmt werden und es können in diesem Fall nur diejenigen Statorwicklungen bestromt werden, welche sich in Statorabschnitten befinden, in deren Nähe sich ein jeweiliger Permanentmagnet 38 befindet. Insbesondere befindet sich ein Permanentmagnet 38 in der Nähe eines Statorabschnitts, wenn bei einer Betrachtung im Wesentlichen senkrecht zur Umlaufbahn in Richtung vom Innenraum I in den Außenraum A der jeweilige Statorabschnitt mit einem Permanentmagneten 38 überlappt, insbesondere im Wesentlichen vollständig überlappt.

Um zu entscheiden, welche Statorabschnitte bestromt werden kann in einem ersten Verfahrensschritt die Position der Antriebsraupe 30a, 30b relativ zur Lastenbaugruppe 26 bestimmt werden. Da die Anordnung der Permanentmagnete 38 in der Antriebsraupe 30a, 30b vorzugsweise im Wesentlichen festgelegt ist und die Anordnung der Statorabschnitte relativ zur Lastenbaugruppe 26 im Wesentlichen festgelegt ist, können in einem zweiten Verfahrensschritt auf Basis dieser Informationen diejenigen Statorabschnitte bestimmt werden, in deren Nähe sich zumindest einer der Permanentmagnete 38 befindet. In einem dritten Verfahrensschritt können die Statorabschnitte, in deren Nähe sich zumindest einer der Permanentmagnete 38 gemäß dem zweiten Verfahrensschritt befindet, bestromt werden. Diese Schritte können in einer Schleife wiederholt werden, um die Antriebsraupe 30a anzutreiben.

Das hier gezeigte Raupenfahrzeug 20 kann, wie dies später in Bezug auf das weitere System erläutert wird, mit jedem der gezeigten Trume 62-68 eine Raupenaufstandsfläche oder zum Teil auch eine zu befahrende Fläche kontaktieren und diese befahren. Entsprechend kann einer der in den Figuren 1, 3a und 3b gezeigten Umlenktrume bei Kontakt mit einer Raupenaufstandsfläche oder mit einer zu befahrenden Fläche auch zu einem Aufstandsflächenkontakttrum werden und der oben beschriebene Aufstandsflächenkontakttrum 62 kann zu einem Umlenktrum werden, der kein Aufstandsflächenkontakttrum ist.

Wie in Figuren 3a und 3b gezeigt umfasst die Antriebsraupe 30a einen Neutralisierungstrum 70, welcher einen Abschnitt des Aufstandsflächenkontakttrums 62 umfasst, welcher bezogen auf die Umlaufrichtung UR am abwärts gelegenem Ende des Aufstandsflächenkontakttrums 62 angeordnet ist. An dem Neutralisierungstrum 70 ist z. B. ortsfest bezüglich der Lastenbaugruppe 26 ein ansteuerbarer Elektromagnet 72 zum Ausbilden eines Magnetfelds vorgesehen, welches das Magnetfeld des Permanentmagneten 38 des in der Antriebsraupe 30a ausgebildeten Läufers 36, der sich in dem Neutralisierungstrum 70 befindet, abschwächt oder neutralisiert. Der Elektromagnet 72 ist eine Ausführungsform einer Neutralisierungsmagnetanordnung. Da die Polarisationsrichtung der Permanentmagnete in der Antriebsraupe 30a alternierend ist, muss die Polarisationsrichtung des durch den Elektromagneten 72 ausgebildeten Magnetfelds ebenso wechseln können, was durch eine Änderung der Stromrichtung bei der Bestromung des Elektromagneten 72 erreicht wird. Durch das Magnetfeld des Elektromagneten kann der Permanentmagnet 38 des Läufers 36 in der Antriebsraupe 30a, der sich in dem Neutralisierungstrum 70 befindet, einfach von der Fahrbahnanordnung gelöst werden. Ebenso kann zusätzlich oder alternativ ein gleich oder entsprechend aufgebauter weiterer Neutralisierungstrum der Antriebsraupe 30a, 30b vorgesehen sein, welcher einen Abschnitt des Aufstandsflächenkontakttrums 62 umfasst, welcher bezogen auf die Umlaufrichtung UR am aufwärts gelegenem Ende des Aufstandsflächenkontakttrums 62 angeordnet ist. Dieser weitere Neutralisierungstrum erlaubt eine im Wesentlichen ruckfreie und im Wesentlichen geräuschlose Berührung eines mit einem Permanentmagneten versehenen und sich in dem weiteren Neutralisierungstrum befindenden Kettengliedes 40 der Antriebsraupe 30a mit der Raupenaufstandsfläche der Fahrbahnanordnung 22.

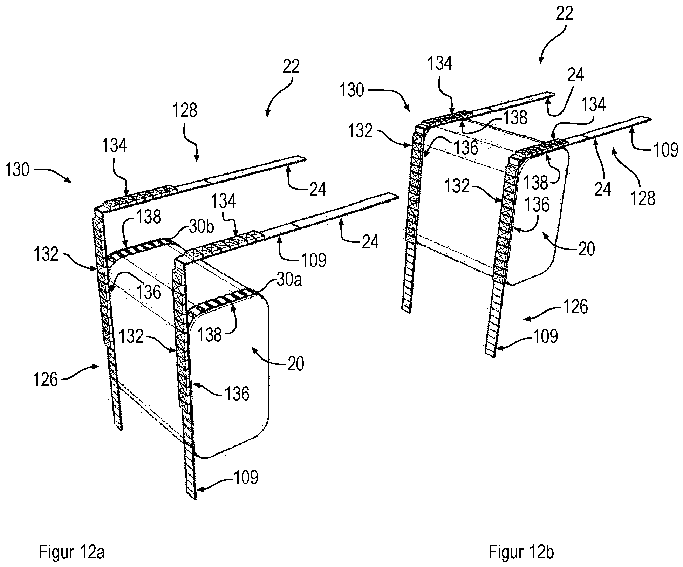

Es ist auch möglich, dass der gesamte Aufstandsflächenkontakttrum 62 oder gar die gesamte Antriebsraupe 30a Teil des oder eines Neutralisierungstrums ist. Diese Ausführungsformen erlauben eine Ablösung eines gesamten Abschnitts der Antriebsraupe 30a von der Raupenaufstandsfläche oder eine Berührung eines gesamten Abschnitts der Antriebsraupe 30a mit der Raupenaufstandsfläche, beispielsweise des Aufstandsflächenkontakttrums 62, bei abgeschwächtem oder neutralisiertem Magnetfeld der in diesem Abschnitt der Antriebsraupe 30a angeordneten Permanentmagnete 38 durchzuführen, was insbesondere bei Richtungsänderungen, wie weiter unten im Zusammenhang mit den Figuren 12a und 12b beschrieben werden ist, von Vorteil ist.

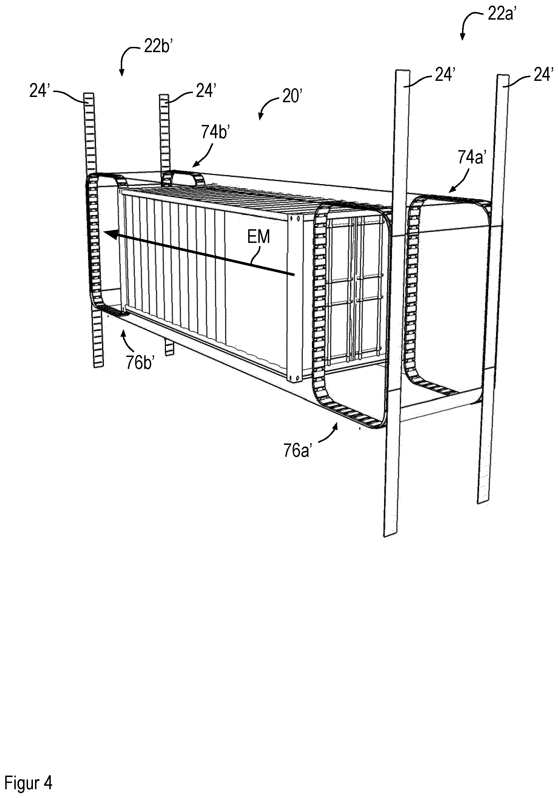

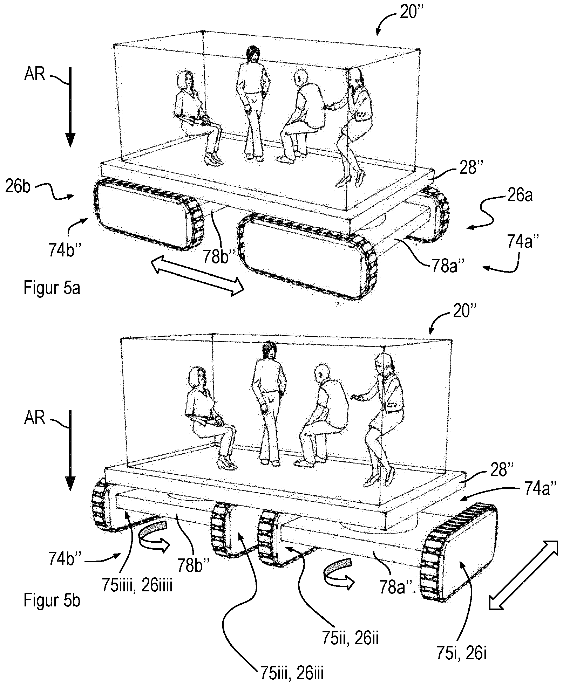

Das oben beschriebene Raupenfahrzeug 20 weist zwei Antriebsraupen 30a, 30b auf. In einer weiteren Ausführungsform, siehe Figur 4 und Figuren 5a und 5b, kann ein darin gezeigtes Raupenfahrzeug 20', 20" zwei oder mehr Paare 74a`, 74b`; 74a", 74b" von Antriebsraupen umfassen. Das Raupenfahrzeug 20' kann eine maximale Erstreckungsrichtung EM aufweisen und die Paare 74a`, 74b` von Antriebsraupen können an Endabschnitten 76a` 76b` des Raupenfahrzeugs, bezogen auf die maximale Erstreckungsrichtung EM, angeordnet sein.

Das Raupenfahrzeug 20" kann eine in Richtung einer zu befahrenden Fläche oder Fahrbahnanordnung weisende Aufstandsrichtung AR aufweisen und die Paare 74a", 74b" von Antriebsraupen können an einer von dem Raupenfahrzeug 20" in Richtung AR weisenden Seite seines Gehäuses 28" angeordnet sein. Insbesondere kann jedes der Paare 74a", 74b" von Antriebsraupen an einer bezüglich des Gehäuses 28" in einer Ebene im Wesentlichen senkrecht zur Aufstandsrichtung AR drehbaren, dem jeweiligen Paar von Arbeitsraupen zugeordneten Halteplattform 78a", 78b" angeordnet sein. Da jede Halteplattform 78a", 78b" um eine zur Aufstandsrichtung AR parallele Drehachse drehbar ist, kann das Raupenfahrzeug 20" ohne eine Bewegung seines Gehäuses 28" relativ zu der zu befahrenden Fläche oder Fahrbahnanordnung die Halteplattformen 78a", 78b" ausrichten (vergleiche Figuren 5a und 5b) und so eine beliebige Fahrtrichtung einschlagen. Wird im Rahmen dieser Anmeldung von einem Raupenfahrzeug 20 gesprochen, so kann es sich hierbei auch um eine Ausführungsform des Raupenfahrzeuges 20' und 20" handeln. Die Raupenfahrzeuge 20' und 20" können, bis auf die beschriebenen, Unterschiede wie das Raupenfahrzeug 20 ausgebildet sein.

Mit der Halteplattform 78a" sind Gestelle 75i, 75ii verbunden und mit der Halteplattform 78b" sind Gestelle 75iii, 75iiii verbunden. Jedes der Gestelle 75i, 75ii wird jeweils von einer Antriebsraupe aus dem Paar 74a" von Antriebsraupen umlaufen, wobei jedes der Gestelle 75i, 75ii einen Stator eines Linearmotors trägt, der die dieses Gestell umlaufende Antriebsraupe antreibt. An jedem der Gestelle 75i, 75ii ist jeweils eine Bewegungsführung befestigt, die die dieses Gestell umlaufende Antriebsraupe führt. Ferner wird jedes der Gestelle 75iii, 75iiii jeweils von einer Antriebsraupe aus dem Paar 74b" von Antriebsraupen umlaufen, wobei jedes der Gestelle 75iii, 75iiii einen Stator eines Linearmotors träg, der die dieses Gestell umlaufende Antriebsraupe antreibt. An jedem der Gestelle 75iii, 75iiii ist jeweils eine Bewegungsführung befestigt, die die dieses Gestell umlaufende Antriebsraupe führt.

Somit ist jede Antriebsraupe der Antriebsraupenpaare 74a", 74b" umlaufend an einer durch ein Gestell 75i, 75ii, 75iii, 75iiii ausgebildeten Lastenbaugruppe 26i, 26ii, 26iii, 26iiii getragen, die auch den der jeweiligen Antriebsraupe zur magnetischen Wechselwirkung zugeordneten Stator trägt. Die Lastenbaugruppen eines Antriebsraupenpaars sind im dargestellten Beispiel baulich zu je einer gemeinsamen Lastenbaugruppe 26a, 26b des jeweiligen Paars 74a", 74b" von Antriebsraupen vereinigt, wobei die gemeinsame Lastenbaugruppe 26a die Gestelle 75i, 75ii und die Halteplattform 78a" umfasst und die gemeinsame Lastenbaugruppe 26b die Gestelle 75iii, 75iiii und die Halteplattform 78b" umfasst. Es wird angemerkt, dass eine gemeinsame Lastenbaugruppe eine Ausführungsform einer Lastenbaugruppe ist.

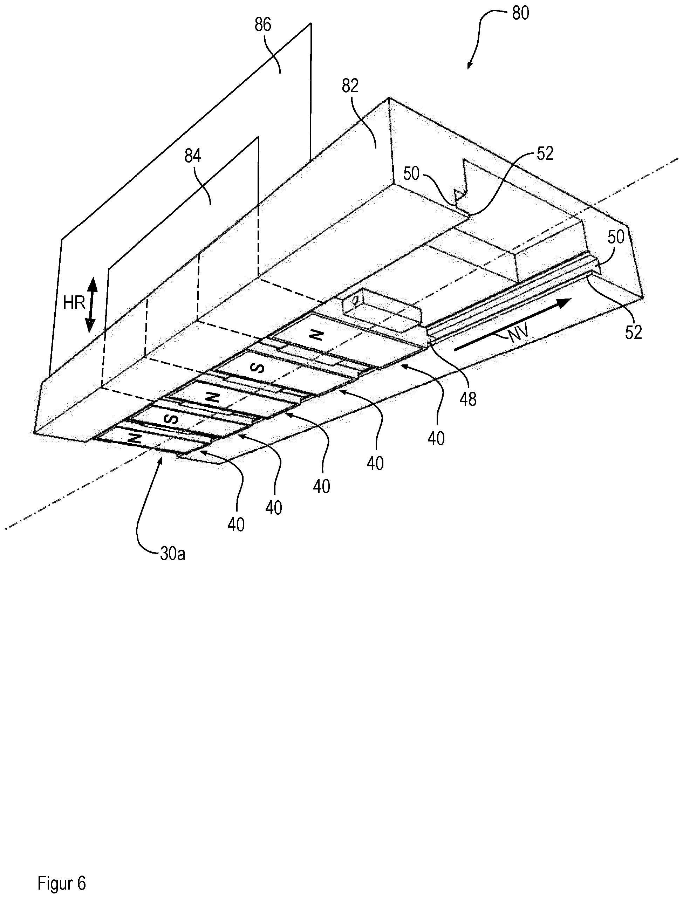

Wie in Figur 6 gezeigt greift zur Sicherung der Antriebsraupe 30a jedes der zwei Führungselemente 48 eines Kettengliedes 40 vorzugsweise in eine zugeordnete Gleitnut 50 einer an der Lastenbaugruppe 26 befestigten Führungsanordnung 80 des Raupenfahrzeugs 20 ein. Hierdurch wird die Antriebsraupe 30a an dem Raupenfahrzeug 20, insbesondere bei einer hängenden Fahrt, gehalten, was eine Haftung durch die von den Permanentmagneten 38 bewirkte anziehende Magnetkraft an einer Fahrbahnanordnung unterstützen kann, da die einzelnen Kettenglieder 40 weniger stark gegenüber der Raupenaufstandsfläche verkippt werden können verglichen mit einem Fall, in dem keine Führungsanordnung 80 vorgesehen ist. Darüber hinaus sorgt die Gleitnut 50 für eine definierte räumliche Relativanordnung der Antriebsraupe 30a auch relativ zum Stator 34 und damit für einen definierten Luftspalt zwischen Läufer 36 und Stator 34.

Die Führungsanordnung 80 kann ortsfest, insbesondere abschnittsweise ortsfest, an der Lastenbaugruppe 26 angeordnete Gleitnuten 50, welche beispielsweise in einem ortsfest an der Lastenbaugruppe 26 angeordneten U-Profil 82 ausgebildet sind, aufweisen. Die zwei Geleitnuten 50 sind vorzugsweise parallel zueinander ausgebildet. Alternativ kann das U-Profil 82 nur abschnittsweise ortsfest an der Lastenbaugruppe 26 angeordnet sein und wie durch die gestrichelten Linien angedeutet, relativ zueinander durch eine Bewegungsanordnung 84 bewegbare Segmente umfassen, welche entlang von Heberichtungen HR bewegbar sind. Die Heberichtungen HR verlaufen im Wesentlichen senkrecht zur Nutverlaufsrichtung NV oder/und im Wesentlichen senkrecht zu einer parallel zu beiden Gleitnuten 50 verlaufenden Schmiegeebene der Antriebsraupe 30a. Alternativ oder zusätzlich kann die Führungsanordnung 80 durch eine Hebevorrichtung 86 entlang von Heberichtungen HR relativ zur Lastenbaugruppe 26 bewegbar sein. Die Bewegungsanordnung 84 oder/und die Hebevorrichtung 86 kann mechanisch, hydraulisch, elektrisch oder/und pneumatisch angetrieben werden. Jede der Gleitnuten 50 bildet zusammen mit dem zugeordneten Führungselement 48 eine zum Gleiten eingerichtete Nut-und-Feder-Verbindung aus. Selbstverständlich kann zur Erreichung einer entsprechenden Wirkung eine entsprechende Feder an dem U-Profil 82 und eine Nut an dem Kettenglied 40 angeordnet sein, wobei dies auf beiden Seiten des Kettengliedes 40 und des U-Profils 82 möglich ist. Um ein Abheben der Kettenglieder 40 von der Lastenbaugruppe 26 zu verhindern reicht es aus, anstelle der Nut nur eine Gleitfeder 52 vorzusehen, welche jeweils in der in Figur 6 abgebildeten Ausführungsform als eine das Führungselement 48 hintergreifende und an der zur Raupenaufstandsfläche einer befahrenen Fahranordnung weisenden Seite des Führungselements 48 angeordnete Strebe oder Platte dargestellt ist. Eine Gleitfeder 52 kann unabhängig vom Rest einer Nut 50 ausgebildet sein.

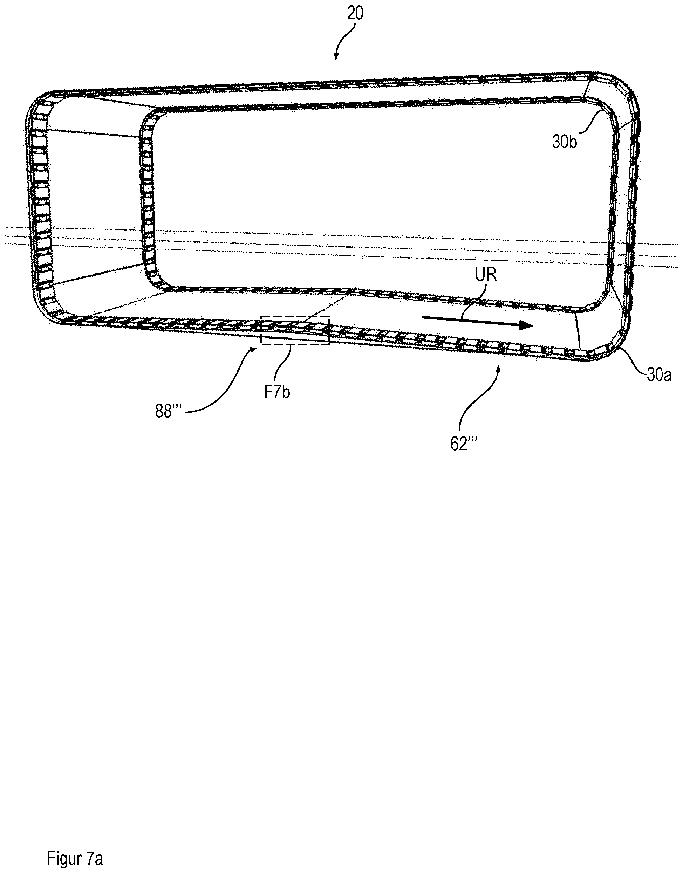

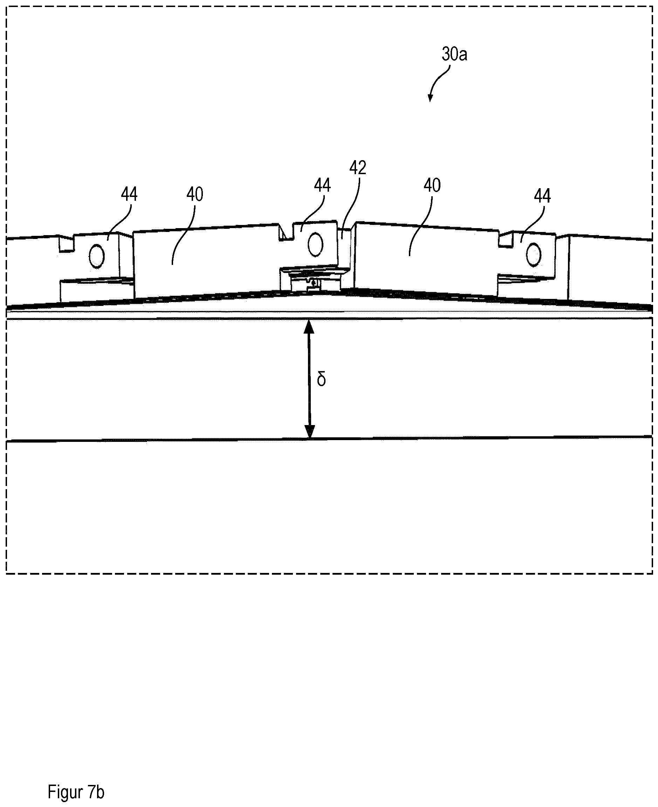

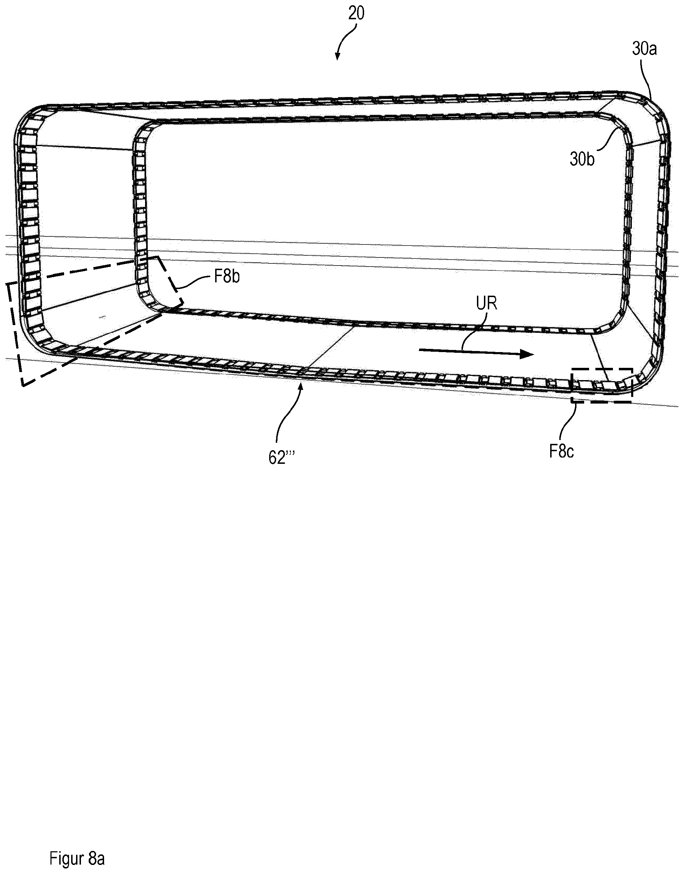

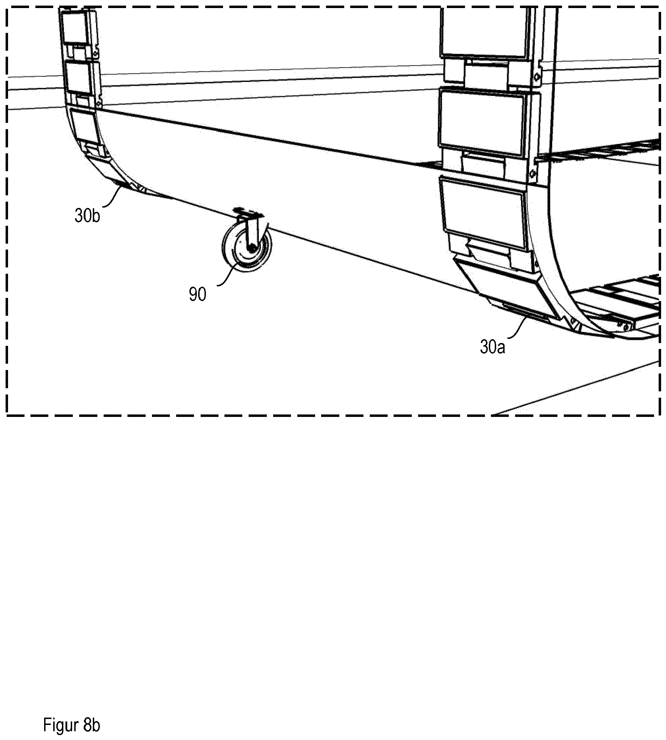

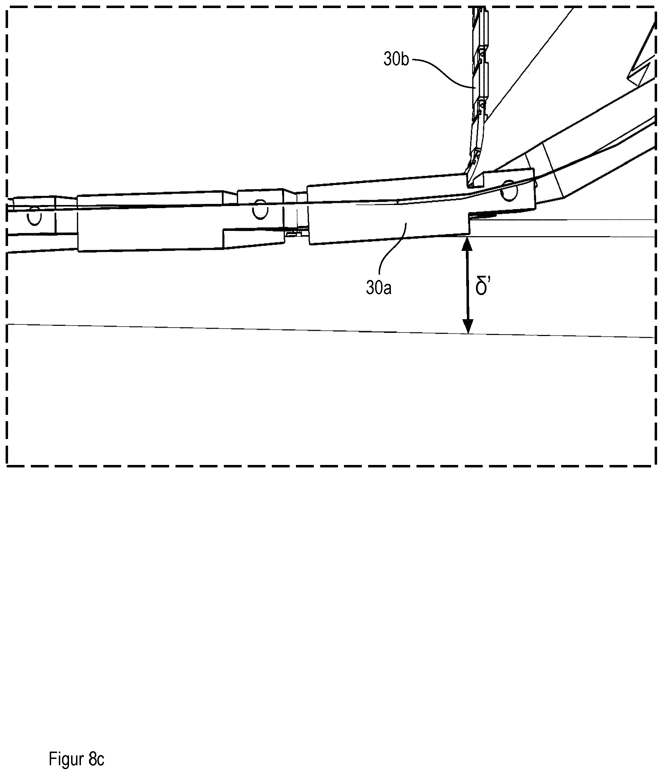

Wie in den Figuren 7a, 7b gezeigt wird bevorzugt, dass der Aufstandsflächenkontakttrum 62‴ einen Hebetrum 88‴ umfasst, welcher insbesondere bei einem Fahrbetrieb des Raupenfahrzeugs 20 auf einer nicht magnetisierbaren Oberfläche, von der zu befahrenden Oberfläche um eine vorbestimmte Höhe δ angehoben werden kann, z. B. unter Verwendung eines oben Beschriebenen U-Profils 82 mit Hebevorrichtung 86 oder/und Bewegungsanordnung 84, um die Kontaktfläche des Aufstandsflächenkontakttrums 62‴ mit der zu befahrenden Oberfläche zu reduzieren. Dies reduziert beim Manövrieren die auf die Antriebsraupe 30a, 30b bzw. deren Kettenglieder 40 wirkenden Scher- und Reibungskräfte. Der Hebetrum 88‴ kann insbesondere einen Mittelabschnitt des Aufstandsflächenkontakttrums 62‴ umfassen, der Hebetrum kann jedoch in einer nicht gezeigten Ausführungsform einteilig oder zweigeteilt ausgebildet sein und an einem bezogen auf eine Umlaufrichtung UR der Antriebsraupe 30a abwärts gelegenem Ende des Aufstandsflächenkontakttrums 62‴ oder/und an einem bezogen auf eine Umlaufrichtung UR der Antriebsraupe 30a aufwärts gelegenem Ende des Aufstandsflächenkontakttrums 62‴ angeordnet sein. In einer besonders einfachen in Figuren 8a bis 8c gezeigten Ausführungsform kann ein bezogen auf eine Umlaufrichtung UR der Antriebsraupe 30a abwärts gelegenes Ende des Aufstandsflächenkontakttrums 62ʺʺ oder/und ein bezogen auf eine Umlaufrichtung UR der Antriebsraupe 30a aufwärts gelegenes Ende des Aufstandsflächenkontakttrums 62ʺʺ jeweils durch eine mechanisch, hydraulisch elektrisch oder/und pneumatisch versetzbare Stützrolle 90, oder ein nicht gezeigtes U-Profil 82 mit Hebevorrichtung 86 oder/und Bewegungsanordnung 84, um eine vorbestimmte Höhe δ' angehoben werden, wie dies in Figur 8c angedeutet ist. Die Aufstandsflächenkontakttrume 62, 62‴ und 62ʺʺ und die in Zusammenhang mit ihnen beschriebenen Anordnungen können in allen Ausführungsformen der Raupenfahrzeuge verwendet werden.

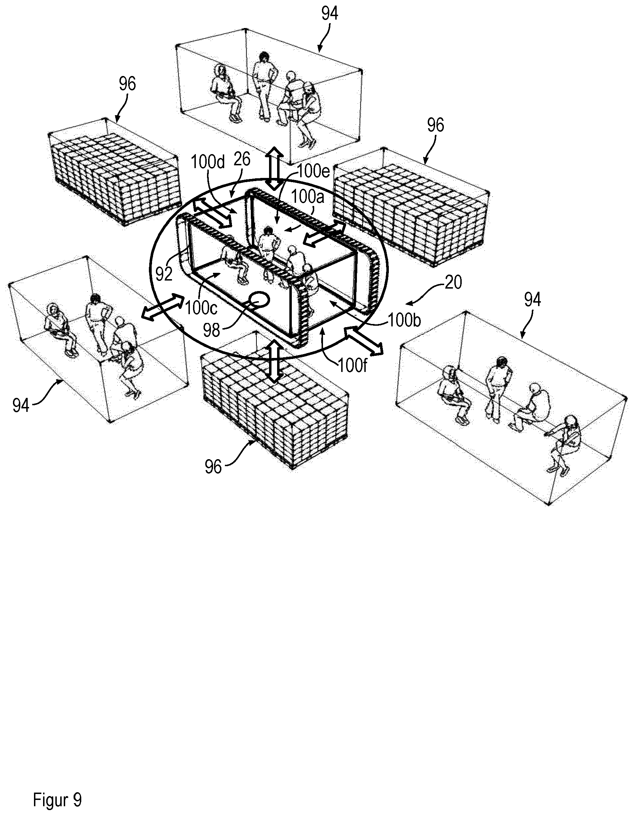

Wie in Figur 9 dargestellt, kann die Lastenbaugruppe 26 des Raupenfahrzeugs 20 einen Tragrahmen 92 umfassen, welcher für eine wieder lösbare Aufnahme von Kabinencontainern 94 zur Personenbeförderung oder/und Lastencontainern 96 zur Lastenbeförderung ausgebildet ist. Hierzu umfasst das Raupenfahrzeug 20 eine zwischen jedem Container aus dem Kabinencontainern 94 und Lastencontainern 96 und dem Tragrahmen 92 (dargestellt mit vergrößerter Linienstärke) wirkende Arretierungsvorrichtung 98, welche dafür eingerichtet ist, eine bestimmungsgemäß zerstörungsfrei lösbare sichere Verbindung zwischen den jeweiligen Container und dem Tragerahmen 92 auszubilden. Vorzugsweise ist der Tragrahmen 92 mit Öffnungen 100a bis 100f ausgebildet, durch welche Kabinencontainer 94 oder/und Lastencontainer 96 in ein Inneres des Tragrahmens 92 zur Wechselwirkung mit der Arretierungsvorrichtung 98 aufgenommen werden können und aus welchen diese Container entnommen werden können.

In einer besonders bevorzugten Ausführungsform liegt zwischen dem Stator 34 und dem Läufer 36 der Linearmotoren 32a, 32b, oder zwischen dem Stator und dem Läufer jedes hier beschriebenen Linearmotors, ein Luftspalt vor, der bei Bestromung des Stators durch die Wechselwirkung der Magnetfelder des Stators und des Läufers ohne Zuhilfenahme von weiteren Stützelementen wie Rollen, Gleitlagern oder Ähnlichem durch die Dimensionierung der Magnetfelder in dem Läufer und dem Stator im bestimmungsgemäßen Betrieb des Raupenfahrzeugs 26 (analog einem Maglev-Verfahren) offen gehalten wird, sodass der Luftspalt ein Spaltmaß aufweist, welches größer als Null ist.

Das oben beschriebene Raupenfahrzeug 20 kann sich nicht nur an einer Fahrbahnanordnung fortbewegen sondern kann auch im üblichen Straßenbetrieb, z. B. unter Energieversorgung durch den Energiespeicher 60, eingesetzt werden. Das vorsehen von zwei jeweils durch einen Linearmotor 32a, 32b angetriebenen Antriebsraupen 30a, 30b erlaubt, wie bei Kettenfahrzeugen üblich, eine Drehung des Raupenfahrzeugs 20 um eine das Raupenfahrzeug 20 durchdringende Drehachse auf einem Straßenbelag oder auf einer Fahrbahnanordnung. Ebenso erlaubt ein derartiger Antrieb eine vereinfachte Einparkbewegung, welche eine Mehrzahl von Zick-Zack-Bewegungen umfasst.

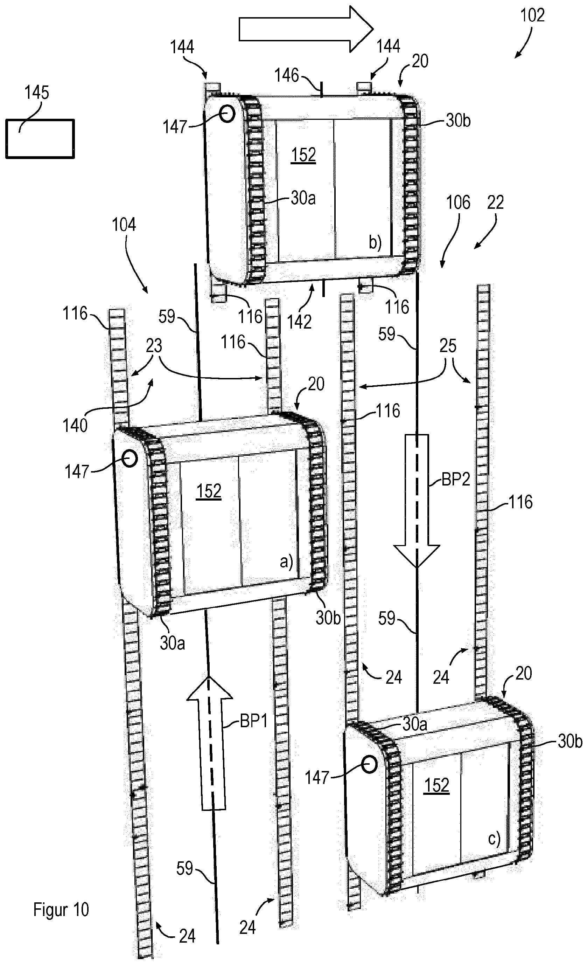

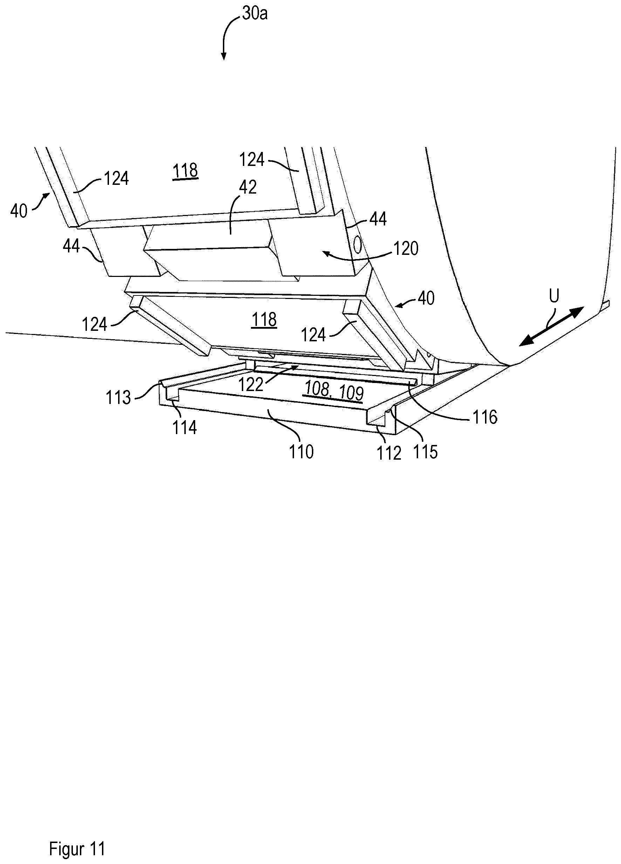

Figur 10 zeigt eine Ausführungsform eines als Aufzugssystem ausgebildeten Fahrzeugsystems 102 mit drei Raupenfahrzeugen 20, welche zur Vereinfachung der Beschreibung zusätzlich mit den Buchstaben a), b) und c) bezeichnet worden sind. Das Fahrzeugsystem 102 umfasst ferner die Fahrbahnanordnung 22, welche in dieser Ausführungsform ein erstes Paar 104 an Fahrrinnen 24 und ein zweites Paar 106 an Fahrrinnen 24 umfasst. Vorzugsweise verjüngt sich jede der Fahrrinnen 24 in ihrer Tiefenrichtung, in Richtung auf den Fahrrinnengrund 108 (siehe Figur 11) hin. Der Fahrrinnengrund 108 ist dafür eingerichtet mit einer Antriebsraupe 30a, 30b des Raupenfahrzeugs 20 in Kontakt zu treten und ist somit ein Abschnitt oder eine Ausbildungsform einer Raupenaufstandsfläche 109. Die Fahrrinnengründe 108 eines Paars 104, 106 an Fahrrinnen 24 können zumindest abschnittsweise oder vollständig die Raupenaufstandsfläche 109 ausbilden. Unterhalb des Fahrrinnengrundes 108, oder den Fahrrinnengrund 108 zumindest abschnittsweise ausbildend, umfasst die Fahrbahnanordnung 22 eine sich entlang der jeweiligen gesamten Fahrrinne 24 erstreckende magnetisierbare Platte 110, insbesondere eine magnetisierbare Stahl- oder Eisenplatte, welche eine Ausbildungsform einer Trageanordnung 23 ist. Insbesondere können die unterhalb der Fahrrinnengründe 108 der Fahrrinnen 24 des ersten Paars 104 an Fahrrinnen 24 angeordneten magnetisierbaren Platten 110 (oder auch eine gemeinsam unter den Fahrrinnen 24 angeordnete magnetisierbare Platten) eine Ausführungsform einer erster magnetisierbaren Trageanordnung 23 ausbilden oder/und die unterhalb der Fahrrinnengründe 108 der Fahrrinnen 24 des zweiten Paars 106 an Fahrrinnen 24 angeordneten magnetisierbaren Platten 110 (oder auch eine gemeinsam unter den Fahrrinnen 24 angeordnete magnetisierbare Platten) eine Ausführungsform einer zweiten magnetisierbaren Trageanordnung 25 ausbilden, welche gegenüber der ersten Trageanordnung 23 entlang einer Wand eines Aufzugschachts versetzt ist und an einer gemeinsamen Seite mit der ersten magnetisierbaren Trageanordnung 23 der Fahrbahnanordnung 22 angeordnet ist. Die Fahrrinnen 24, insbesondere jedes Paar 104, 106 der Fahrrinnen 24 definieren in den jeweiligen Abschnitten Bewegungspfade BP1, BP2 der Raupenfahrzeuge 20.

Zwischen der oben beschriebenen Trageanordnung 23, 25 und den den Läufer 36 der Linearmotoren 32a, 32b ausbildenden Permanentmagneten 38 liegt eine wechselseitig anziehende Magnetkraft vor, welche durch eine magnetische Wechselwirkung zwischen der Trageanordnung 23, 25 und den Permanentmagneten 38 bewirkt wird.

Die Kombination aus Trageanordnung 23, 25 und den Permanentmagneten 38 ist, beispielsweise durch die Dimensionierung der magnetisierbaren Platten 110 und durch die Stärke des durch die Permanentmagnete 38 ausgebildeten Magnetfelds so gewählt, dass die wechselseitig anziehende Magnetkraft bei bestimmungsgemäßem Betrieb des Raupenfahrzeugs 20 an der Fahrbahnanordnung 22 ein Mehrfaches, etwa das Zehnfache, eines zulässigen Gesamtgewichts des Raupenfahrzeugs 20 von beispielsweise 1,5 T überschreitet.

Figur 11 zeigt einen detaillierten Ausschnitt eines Fahrzeugsystems 102, in welchem ein Eingriff der Antriebsraupe 30a, 30b in eine Fahrrinne 24 gezeigt ist. Der Fahrrinnengrund 108, welche die Raupenaufstandsfläche 109 in diesem Ausführungsbeispiel ausbildet, umfasst in Erstreckungsrichtung der Fahrrinne 24 angeordnete Nuten 112, 114 sowie Vorsprünge 116, von denen in Figur 11 nur einer dargestellt ist, diese sind in Figur 10 jedoch durch die die Fahrrinnen 24 querenden Striche angedeutet, von welchen zur Wahrung der Übersichtlichkeit nur einige mit Bezugszeichen versehen sind. Die Zentrallasche 42 und die Seitenlaschen 44 jedes der Kettenglieder 40 sind bezogen auf eine Kettengliedauflagefläche 118, welche einen Abschnitt einer Aufstandsflächenkontaktfläche 122 der Antriebsraupe ausbildet, in einer Dickenrichtung des Kettengliedes 40 nach hinten (von der Kettengliedauflagefläche 118 in Richtung auf den Innenbereich I (siehe Figur 1) ) versetzt angeordnet, sodass in der Antriebsraupe 30a, 30b Ausnehmungen 120 und somit Vertiefungen durch diesen Versatz ausgebildet werden, in die Vorsprünge 116 in einem bestimmungsgemäßen Betrieb des Raupenfahrzeugs 20 in dem Fahrzeugsystem 102 eingreifen. Hierdurch wird zwischen der Raupenaufstandsfläche 109 und der Aufstandsflächenkontaktfläche 122 ein Formschluss ausgebildet, welcher im Wesentlichen parallel zu dem Abschnitt der Umlaufbahn U der Antriebsraupe 30a, 30b wirkt, der der Aufstandsflächenkontaktfläche 122 zugeordnet ist. An der Kettengliedauflagefläche 118 können Gummikörper 124, beispielsweise Gummiklötze oder -stäbe, angeordnet sein, welche in die Nuten 112, 114 eingreifen können, sodass die Kettengliedauflagefläche 118 mit dem Fahrrinnengrund 108 in Berührkontakt bei bestimmungsgemäßen Betrieb des Fahrzeugsystems 102 gelangt. Ein Abstand zwischen hintereinander in einer Erstreckungsrichtung der Fahrrinne 24 angeordneten, vorzugsweise direkt benachbarten Vorsprüngen 116 entspricht oder/und gleicht insbesondere einer Erstreckung des Kettengliedes 40 in einer Erstreckungsrichtung der Antriebsraupe 30a, 30b.

Wird das mit Gummikörpern 124 an der Antriebsraupe 30a, 30b versehene Raupenfahrzeug 20 hingegen auf einem nicht magnetisierbaren Untergrund wie zum Beispiel einer Straße betrieben, so verhindern die Gummikörper 124 einen Kontakt von beispielsweise metallisch ausgebildeten Kettengliedern 40 mit diesem Untergrund, wodurch sowohl der Untergrund als auch die Kettenglieder 40 vor einem Verschleiß geschützt sind, insbesondere werden die in den Kettengliedern 40 vorgesehenen Magnete vor einem Verschleiß geschützt. Die Nuten 112, 114 gehen in geneigte Flanken 113, 115 über, welche eine Verjüngung der Fahrrinne 24 zum Fahrrinnengrund 108 ausbilden. Vorzugsweise weist eine, eine Mehrzahl von oder jeder der Vorsprünge 116 im Querschnitt quer zu seiner Haupterstreckungsrichtung eine dreieckige Querschnittsfläche auf, wobei die dreieckige Querschnittsfläche einen rechten Winkel aufweisen kann. Die Hypotenuse einer derartigen Querschnittsfläche kann zum Fahrrinnengrund 108 abfallen, während an der die Kathete ausbildenden Fläche des Vorsprungs 116 eine den oben beschriebenen, in Richtung im Wesentlichen parallel zu dem Abschnitt der Umlaufbahn U der Antriebsraupe 30a, 30b, der der Aufstandsflächenkontaktfläche 122 zugeordnet ist, wirkenden, Formschluss bewirkende Kraft angreifen kann.

Die Ausrichtung der Raupenaufstandsfläche 109 der Fahrbahnanordnung 22, welche vorzugsweise durch die Fahrrinnengründe des in den Figuren 12a, 12b gezeigten Paars an Fahrrinnen 24 ausgebildet sein kann, kann sich, wie in Figur 12a gezeigt, von vertikal zu horizontal, und umgekehrt, ändern, wobei nur der Übergang von einem vertikal verlaufenden Abschnitt 126 der Raupenaufstandsfläche 109 zu einem horizontal verlaufenden Abschnitt 128 der Raupenaufstandsfläche 109, welcher bezogen auf eine Gravitationsrichtung von unten zu befahrend ist, erläutert wird. Der Übergang von einem vertikal verlaufenden Abschnitt der Raupenaufstandsfläche 109 zu einem horizontal verlaufenden Abschnitt der Raupenaufstandsfläche 109, welcher bezogen auf eine Gravitationsrichtung von oben zu befahren ist, ist analog ausgebildet.

Wie in den Figuren 12a und 12b gezeigt, treffen in einem Übergangsbereich 130 die Abschnitte 126 und 128 der Raupenaufstandsfläche 109 beispielsweise unter einem Winkel von im Wesentlichen 90° aufeinander. In dem Abschnitt 126, vorzugsweise an jeder der Fahrrinnen 24 des Abschnitts 126, ist eine Mehrzahl von Elektromagneten 132 angeordnet, die derart ausgebildet und ansteuerbar sind, dass sie ein Magnetfeld der Permanentmagnete 38 eines Trums jeder der Antriebsraupen 30a, 30b, der den Abschnitt 126 berührt, neutralisieren oder abschwächen können. In dem Abschnitt 128, vorzugsweise an jeder der Fahrrinnen 24 des Abschnitts 128, ist eine Mehrzahl von Elektromagneten 134 angeordnet, die derart ausgebildet und ansteuerbar sind, dass sie ein Magnetfeld der Permanentmagnete 38 eines Trums jeder der Antriebsraupen 30a, 30b, welcher den Abschnitt 128 berührt, neutralisieren oder abschwächen können. Vorzugsweise sind in den Abschnitten 126 und 128 Hallsonden oder andere Detektoren vorgesehen, um die Ausrichtung und Stärke der Magnetfelder der Permanentmagnete 38 in den Abschnitten der Antriebsraupen 30a, 30b zu bestimmen, die die jeweiligen Abschnitte 126, 128 berühren. Die Elektromagnete 132, 134 sind vorzugsweise auf einer dem Fahrrinnengrund 108 entgegengesetzt gerichteten Seite der jeweiligen Fahrrinne 24 angeordnet.

Bewegt sich nun das Raupenfahrzeug 20 entlang eines vertikalen Abschnitts der Raupenaufstandsfläche 109 in dem Abschnitt 126, wie dies in Figur 12a gezeigt ist, so wird keiner der Elektromagnete 132 oder 134 bestromt und die Trume 136 der Antriebsraupen 30a, 30b weisen jeweils die Funktion eines Aufstandsflächenkontakttrums auf. Wird diese Bewegung fortgeführt, sodass die Trume 138 mit dem den Abschnitt 128 in Berührkontakt gelangen, so weisen sowohl die Trume 136 als auch die Trume 138 die Funktion von Aufstandsflächenkontakttrumen auf und haften, aufgrund der Wechselwirkung der Permanentmagnete 38 mit nicht explizit dargestellten Trageanordnungen, mit diesen Trumen 136, 138, an der Fahrbahnanordnung an. Die Ausrichtung und Stärke der Magnetfelder der Permanentmagnete 38 in den Trumen 136 in der in Figur 12b gezeigten Position wird beispielsweise durch die oben erwähnten Hallsensoren bestimmt und die Elektromagnete 132 werden im nächsten Schritt so bestromt, dass deren Magnetfelder das Magnetfeld der Permanentmagnete 38 in den Trumen 136 abschwächen oder neutralisieren. Hierdurch wird die anziehende Kraft zwischen dem Raupenfahrzeug 20 und der Fahrbahnanordnung 22 im Bereich des Abschnitts 126 reduziert oder/und aufgehoben, sodass im Wesentlichen nur eine anziehende Kraft zwischen dem Raupenfahrzeug 20 und der Fahrbahnanordnung 22 im Bereich des Abschnitts 128 vorliegt. Das Raupenfahrzeug 20 wird wieder in Bewegung gesetzt und bewegt sich am horizontal verlaufenden Abschnitt der Raupenaufstandsfläche 109 der Fahrbahnanordnung 22 weiter, bezogen auf die Gravitationsrichtung von unten an ihr hängend.

Bewegt sich das Raupenfahrzeug 20 in umgekehrter Richtung, beginnend auf einem horizontal verlaufenden Abschnitt der Raupenaufstandsfläche der Fahrbahnanordnung, so ähnelt der Prozess des Überquerens des Übergangsbereichs 130 dem oben dargestellten Prozess, es werden jedoch die Elektromagnete 134 verwendet, um das Magnetfeld der Permanentmagnete in den Trumen 138 abzuschwächen oder/und zu neutralisieren.

Sind die Trume 136, 138 als Neutralisierungstrume ausgebildet oder von Neutralisierungstrumen umfasst, so kann die oben beschriebene Abschwächung oder/und Neutralisierung des durch die in den Trumen 136, 138 angeordneten Permanentmagneten 38 ausgebildeten magnetischen Feldes durch die jeweiligen Neutralisierungsmagnetanordnungen ausgeführt werden und es kann auf die Elektromagneten 132, 134 verzichtet werden.

Eine Mehrzahl an Übergangsbereichen kann eine Geschlossene Fahrbahnanordnung ausbilden. Wird diese von einem Raupenfahrzeug 20 befahren, so wird jeder seiner Trume 62 bis 68 zumindest zeitweise ein Aufstandsflächenkontakttrum.

Wie in Figur 10 gezeigt bewegen sich die Raupenfahrzeuge 20 a) bis c) ähnlich einem Paternoster auf einer geschlossenen Bahn, wobei in Figur 10 der obere Wendepunkt dieser Bahn dargestellt ist.

Das erste Paar 104 an Fahrrinnen 24 mit den zugeordneten Abschnitten der Raupenaufstandsfläche 109 und den in den Fahrrinnen 24 angeordneten Abschnitten der ersten Trageanordnung 23 zusammen mit einem nicht gezeigtem Gerüst sind eine Ausführungsform eines Fahrabschnitts 140. An den Fahrabschnitt 140 grenzt direkt ein Transportabschnitt 142 an, welcher Abschnitte 144 von Fahrrinnen 24 umfasst, die wiederum, wie oben beschrieben, Abschnitte der Raupenaufstandsfläche und der ersten Trageanordnung 23 ausbilden. Selbstverständlich können diese Abschnitte auch der zweiten Trag Anordnung 25 zugeordnet werden. Ferner kann an dem Transportabschnitt 142 ein Abschnitt 146 der Stromschiene 59 angeordnet sein. Der Transportabschnitt 142 umfasst ferner vorzugsweise ein nicht gezeigtes Gerüst.

Der Transportabschnitt 142 kann als eine mittels einer Versatzeinrichtung 145 mechanisch, hydraulisch, elektrisch oder/und pneumatisch verschiebbare Platte mit den oben genannten Abschnitten 144 und 146 ausgebildet sein.

In einer ersten Ruheposition des Transportabschnitts 142 sind die Abschnitte 144 der Fahrrinnen 24 bündig mit den Fahrrinnen des ersten Paars 104 an Fahrrinnen 24 ausgerichtet und der Abschnitt 146 der Stromschiene 59 ist mit der zwischen den Fahrrinnen 24 des ersten Paars 104 an Fahrrinnen 24 verlaufenden Abschnitt der Stromschiene 59, beispielsweise durch einen Schleifkontakt, elektrisch leitend verbunden.

In einer zweiten Ruheposition des Transportabschnitts 142 sind die Abschnitte 144 der Fahrrinnen 24 bündig mit den Fahrrinnen des zweiten Paars 106 an Fahrrinnen 24 ausgerichtet und der Abschnitt 146 der Stromschiene 59 ist mit der zwischen den Fahrrinnen 24 des zweiten Paars 106 an Fahrrinnen 24 verlaufenden Abschnitt der Stromschiene 59, beispielsweise durch einen Schleifkontakt, elektrisch leitend verbunden.

Bewegt sich das Raupenfahrzeug 20 (z. B. Raupenfahrzeug 20 a)) entlang des ersten Paars 104 an Fahrrinnen 24 nach oben, so kann es auf den sich in der ersten Ruheposition befindenden Transportabschnitt 142 fahren. Der Transportabschnitt 142 kann dann translatorisch von seiner ersten Ruheposition in seine zweite Ruheposition bewegt werden. Während dieser Bewegung kann der Energiespeicher 60 elektrische Energie für die Energieversorgung des Stromrichters 56 bereitstellen. Auch unabhängig von der Energieversorgung ist die Anziehungskraft zwischen den Permanentmagneten 38 und der Trageanordnung in dem Transportabschnitt 142 gegeben, sodass das Raupenfahrzeug 20 sich nicht von dem Transportabschnitt 142 löst. Hierzu wird vorzugsweise unter Verwendung einer Bremsvorrichtung 147 eine Relativbewegung bezüglich der Lastenbaugruppe 26 einer Antriebsraupe 30a, 30b unterbunden. Erreicht der Transportabschnitt 142 seine zweite Ruheposition, so kann die Bremsvorrichtung 146 gelöst werden und das Raupenfahrzeug 20 kann sich entlang des zweiten Paars 106 an Fahrrinnen 24 nach unten weiter bewegen, wie dies beispielsweise für das Raupenfahrzeug 20 c) in Figur 10 gezeigt ist.

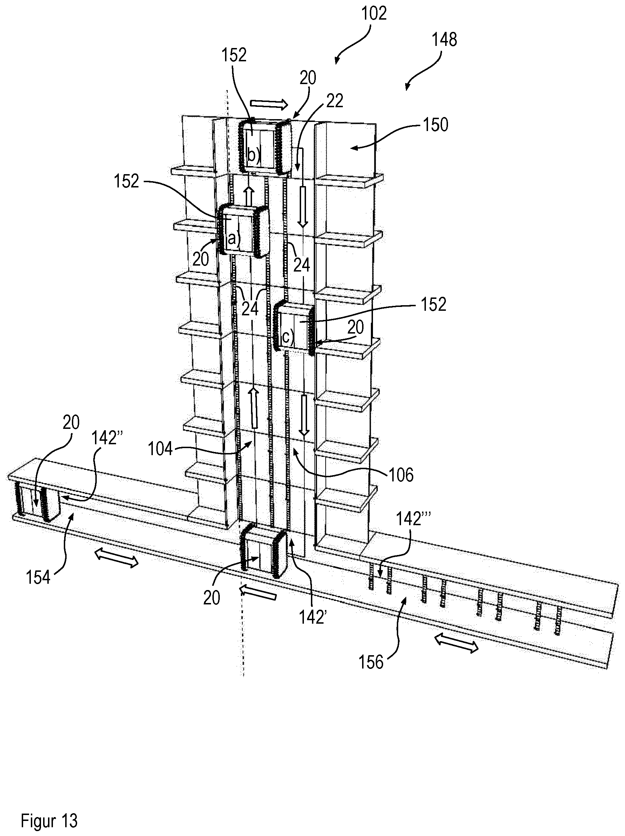

Figur 13 zeigt eine Ansicht einer Verwendung eines oben beschriebenen Fahrzeugsystems 102 aus Figur 10 in einem Gebäude 148 zum Transport von Lasten, zum Beispiel von Personen. Die Fahrbahnanordnung 22 ist insbesondere an einer Gebäudewand 150 angeordnet und das Raupenfahrzeug 20 ist als eine Fahrstuhlkabine ausgebildet. Die Übergänge zum Gebäude 148 durch Türen 152 der Raupenfahrzeuge 20 sind nicht explizit in Figur 13 dargestellt, da Figur 13 einen schematischen Schnitt durch das Gebäude 148 zeigt und eine optionale gebäudeseitige Tür, durch welche das Raupenfahrzeug 20 über die Tür 152 bestiegen werden kann, ist in dem schematischen Schnitt nicht dargestellt. In Figur 13 ist ferner der untere Wendepunkt der geschlossenen Bahn gezeigt, auf welcher sich die Raupenfahrzeuge 20 a) bis c) bewegen, welcher ebenso mit einem Transportabschnitt 142' ausgebildet ist. Der Transportabschnitt 142` ist mutatis mutandis wie der Transportabschnitt 142 ausgebildet und weist zumindest eine erste und eine zweite Ruheposition auf, wie im Fall des Transportabschnitts 142, sodass Raupenfahrzeuge auch über den Transportabschnitt 142` zwischen dem ersten Paar 104 an Fahrrinnen 24 und dem zweiten Paar 106 an Fahrrinnen 24 wechseln können. Zu beachten ist, dass aufgrund der gewählten Perspektive eine der Fahrrinnen 24 des zweiten Paars 106 an Fahrrinnen 24 in Figur 13 nicht gezeigt ist.

Es ist zu beachten, dass eines der, eine Mehrzahl von oder alle der Raupenfahrzeuge 20 a) bis c) das erste Paar 104 an Fahrrinnen 24 oder das zweite Paar 106 an Fahrrinnen 24 gleichzeitig befahren können und da die Linearmotoren 32a, 32b jeweils in den Raupenfahrzeugen 20 a) bis c) angeordnet sind, kann sich diese Mehrzahl der Raupenfahrzeuge gleichzeitig entlang des durch das erste 104 oder zweite 106 Paar an Fahrrinnen 24 definierten gemeinsamen Bewegungspfads bewegen, welcher entlang zumindest des ersten Paars 104 an Fahrrinnen 24 und des zweiten Paars 106 an Fahrrinnen 24 durchgehend ausgebildet ist. Im Gegensatz zu einem Paternoster ist jedoch der Abstand zwischen den einzelnen Raupenfahrzeugen 20 a) bis c) nicht festgelegt und die Raupenfahrzeuge können, beschränkt nur durch eine Kollisionsvermeidung untereinander, einzelne Positionen entlang des gemeinsamen Bewegungspfads separat voneinander ansteuern. Ferner kann ein Raupenfahrzeug 20, welches sich auf dem Transportabschnitt 142' befindet, in einen ersten Aufnahmeraum 154 z. B. zu Wartungszwecken oder Lagerzwecken bewegt werden, oder ein sich auf einem Transportabschnitt 142" befindendes in dem ersten Aufnahmeraum 154 aufgenommenes Raupenfahrzeug 20 kann in die erste oder zweite RuhePosition des Transportabschnitts 142" bewegt werden. Befindet sich kein Transportabschnitt an dem unteren Wendepunkt, so kann aus einem zweiten Aufnahmeraum 156 ein Transportabschnitt 142‴ in seine erste oder zweite Ruheposition an dem unteren Wendepunkt bewegt werden. Ebenso können Transportabschnitte in den zweiten Aufnahmeraum 156 bewegt werden.

Alle Transportabschnitte 142, 142`, 142" und 142‴ sind vorzugsweise gleichartig oder gleich aufgebaut und weisen jeweilige erste und zweite Ruhepositionen auf, die denen des Transportabschnitts 142 entsprechen oder gleichen.

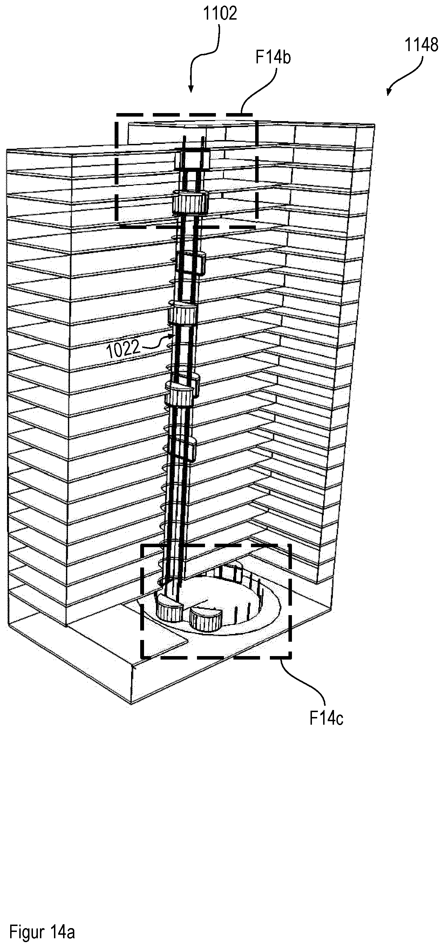

Im Folgenden wird eine in Figuren 14a bis 14c gezeigte zweite Ausführungsform des Fahrzeugsystems 1102 beschrieben, wobei nur auf die Unterschiede zur Ausführungsform des Fahrzeugsystems 102 und der darin verwendeten Raupenfahrzeuge 20 Bezug genommen wird. Für die Beschreibung der weiteren Elemente, Teile und Baugruppen wird auf die erste Ausführungsform verwiesen, wobei in der zweiten Ausführungsform, Elemente, Teile und Baugruppen mit einem um 1000 erhöhten Bezugszeichen gegenüber denjenigen Elementen, Teilen und Baugruppen der ersten Ausführungsform bezeichnet werden, denen sie entsprechen. Teilweise sind in den Figuren Details der Ausführungsformen weggelassen, jedoch können die Aspekte der ersten Ausführungsform des Fahrzeugsystems 102 für die zweite Ausführungsform des Fahrzeugsystems 1102 verwendet werden.

Die Fahrbahnanordnung 1022 umfasst ein auf einer ersten Seite der Fahrbahnanordnung 1022 angeordnetes erstes Paar 1158 von parallel verlaufenden Fahrrinnen 1024 und ein auf einer zweiten Seite der Fahrbahnanordnung 1022 angeordnetes zweites Paar 1160 von parallel verlaufenden Fahrrinnen 1024, wobei die erste Seite der Fahrbahnanordnung 1022 der zweiten Seite der Fahrbahnanordnung 1022 entgegengesetzt angeordnet ist. Die auf einer Seite der Fahrbahnanordnung angeordneten Fahrrinnen 1024 umfassen jeweilige Trageanordnungen. Zwischen dem ersten 1158 und dem zweiten 1160 Paar von Fahrrinnen 1024 ist eine der übersichthalber nicht gezeigte Haltestruktur, vorzugsweise ein Halterahmen, angeordnet, an welchem das erste 1158 und zweite 1160 Paar von Fahrrinnen 1024 ortsfest bezüglich des Gebäudes 1148 angeordnet sind. Das erste Paar 1158 von Fahrrinnen 1024 umfasst vorzugsweise die erste Trageanordnung 1023 und das zweite Paar 1160 von Fahrrinnen 1024 umfasst vorzugsweise die zweite Trageanordnung 1025. Jedem Paar 1158, 1160 ist eine Stromschiene 1059 zugeordnet, diese ist jedoch in den Figuren übersichthalber nicht gezeigt. Das Raupenfahrzeug 1020 weist, Antriebsraupen auf, welche ausgenommen einem den Fahrrinnen 1024 während eines bestimmungsgemäßen Betriebs zugewandten Abschnitts in dem Raupenfahrzeug 1020 verlaufen und somit in den Figuren nicht zu erkennen sind.

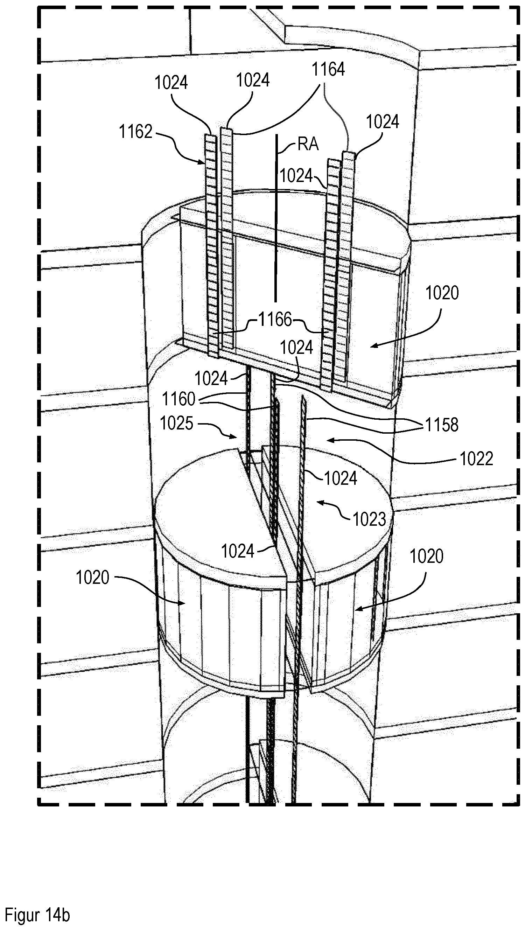

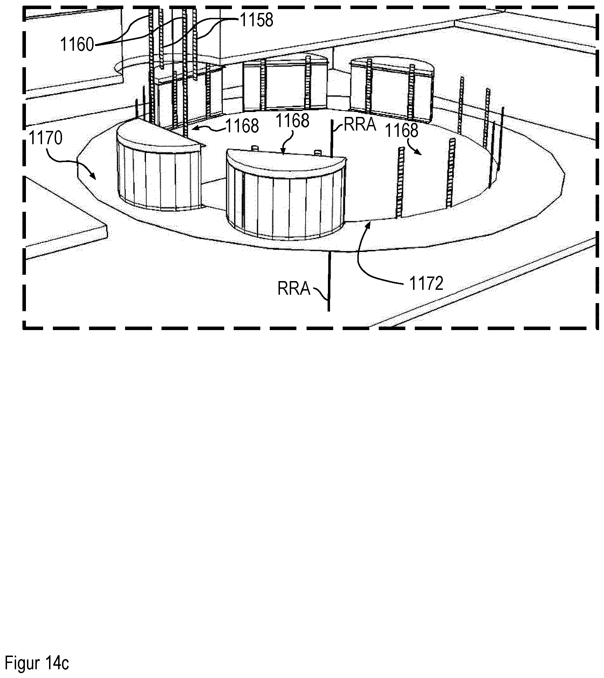

Das Fahrzeugsystem 1102 weist zumindest im oberen Wendepunkt einen Paternoster-förmigen Bewegungspfad der Raupenfahrzeuge, zumindest an dem in Figur 14 gezeigten oberen Wendepunkt, auf. Die Fahrbahnanordnung 1022 des Fahrzeugsystems 1102 weist einen Transportabschnitt 1162 auf, welcher um eine Rotationsachse RA in dem Gebäude 1148 drehbar gehalten ist.

Die Rotationsachse RA verläuft parallel zu dem durch die Fahrbahnanordnung 1022 definierten Bewegungspfad für das Raupenfahrzeug, welcher insbesondere durch den, vorzugsweise lotrechten, Verlauf der Fahrrinnen 1024 definiert ist, wobei das Raupenfahrzeug die Fahrbahnanordnung 1022 in den Fahrrinnen 1024 während der Fahrt berührt.

Der Transportabschnitt 1162 grenzt direkt an das erste 1158 und zweite 1160 Paar von Fahrrinnen 1024 an, welche jeweils Ausführungsformen von Fahrabschnitten sind. Der Transportabschnitt 1162 ist vorzugsweise als eine Platte ausgebildet, welche übersichtshalber nicht explizit in der Figur 14 dargestellt ist. Der Transportabschnitt 1162 umfasst auf einer ersten Seite des Transportabschnitts 1162 ein erstes Paar 1164 von parallel verlaufenden Abschnitten von Fahrrinnen 1024 und umfasst auf einer zweiten Seite des Transportabschnitts 1162 angeordnetes zweites Paar 1166 von parallel verlaufenden Abschnitten von Fahrrinnen 1024, wobei die erste Seite des Transportabschnitts 1162 der zweiten Seite des Transportabschnitts 1162 entgegengesetzt angeordnet ist.

Es ist ferner möglich, auch jede einzelne Seite des Transportabschnitts 1162 mit den jeweils auf dieser Seite angeordneten Abschnitten von Fahrrinnen 1024 und Abschnitten der jeweiligen Trageanordnung 1023, 1025 als einen einzelnen Transportabschnitt anzusehen.

In einer ersten Ruheposition des Transportabschnitts 1162 sind das erste Paar 1164 von parallel verlaufenden Abschnitten von Fahrrinnen 1024 bündig mit den Fahrrinnen des ersten Paars 1158 an Fahrrinnen 1024 ausgerichtet, und das zweite Paar 1166 von parallel verlaufenden Abschnitten von Fahrrinnen 1024 ist bündig mit den Fahrrinnen des zweiten Paars 1160 an Fahrrinnen 1024 ausgerichtet. In einer zweiten Ruheposition des Transportabschnitts 1162 sind das erste Paar 1164 von parallel verlaufenden Abschnitten von Fahrrinnen 1024 bündig mit den Fahrrinnen des zweiten Paars 1160 an Fahrrinnen 1024 ausgerichtet, und das zweite Paar 1166 von parallel verlaufenden Abschnitten von Fahrrinnen 1024 ist bündig mit den Fahrrinnen des ersten Paars 1158 an Fahrrinnen 1024 ausgerichtet.

Diese Anordnung erlaubt in jeder der ersten und zweiten Ruheposition des Transportabschnitts 1162 einem Raupenfahrzeug 1020 von einem Paar aus dem ersten 1158 oder zweiten 1160 Paar von Fahrrinnen 1024 auf das jeweilige Paar 1164, 1166 von parallel verlaufenden Abschnitten von Fahrrinnen 1024 des Transportabschnitts 1162 zu fahren. Wird der Transportabschnitt 1162 von der ersten in seine zweite Ruheposition gedreht, so kann das Raupenfahrzeug 1020 den Transportabschnitt 1162 verlassen und entlang dem anderen Paar aus dem ersten 1158 oder zweiten 1160 Paar von Fahrrinnen 1024 sich weiter fortbewegen.

Wie in Figuren 14a und 14c zu sehen weist das Fahrzeugsystem 1102 keinen unteren Wendepunkt auf, die Fahrrinnen des ersten Paars 1158 an Fahrrinnen 1024 enden in dieser Ausführungsform nicht in einem Transportabschnitt. Die Fahrrinnen des zweiten Paars 1160 an Fahrrinnen 1024 bilden in dem in Figur 14c gezeigtem Bereich einen Fahrabschnitt aus, der einem Transportabschnitt 1168 benachbart ist. Der Transportabschnitt 1168 ist in einer Ausnehmung 1170 einer Revolveranordnung 1172 angeordnet, wobei die Revolveranordnung 1172 eine Mehrzahl von Transportabschnitten 1168 aufweisen kann, von denen nur einige mit Bezugszeichen versehen sind. Die Transportabschnitte 1168 sind abgesehen von der Art der Bewegbarkeit im Wesentlichen wie die Transportabschnitte 142 ausgebildet und es wird auf eine explizite Beschreibung an dieser Stelle verzichtet. Die Ausnehmung 1170 kann zylinderförmig ausgebildet sein. Die Transportabschnitte 1168 können auf einem Ring der Revolveranordnung 1172 zur gemeinsamen Bewegung angeordnet sein.

Der Ring der Revolveranordnung 1172 kann um eine Rotationsachse RRA gedreht werden, sodass die einzelnen, vorzugsweise ortsfest daran befestigten, Transportabschnitte 1168 bei dieser Rotation versetzt werden. Vorzugsweise wird die Revolveranordnung 1172 zwischen festgelegten Positionen um die Rotationsachse RRA gedreht, in welchen ein Transportabschnitt 1168 so ausgerichtet ist, dass die auf ihm angeordneten Abschnitte von Fahrrinnen 1024 bündig mit den Fahrrinnen 1024 des zweiten Paars 1160 an Fahrrinnen 1024 ausgerichtet sind.

Die Rotationsachse RRA verläuft vorzugsweise parallel zu dem, wie oben dargelegt, durch den Verlauf der Fahrrinnen 1024 definierten Bewegungspfad für das Raupenfahrzeug und somit insbesondere parallel zu der Rotationsachse RA. Die Rotationsachse RRA oder/und die Rotationsachse RA verlaufen vorzugsweise lotrecht.

Entsprechend kann ein Raupenfahrzeug 1020 über das Paar 1160 an Fahrrinnen auf einen der Transportabschnitte 1168 fahren. Ebenso kann ein Raupenfahrzeug 1020 von dem mit dem Paar 1160 an Fahrrinnen ausgerichteten Transportabschnitt 1168 auf das Paar 1160 an Fahrrinnen fahren. Die Revolveranordnung 1172 kann zwischen den festgelegten Positionen rotiert werden. Auf diese Art und Weise können Raupenfahrzeuge 1020 in der Revolveranordnung 1172 geparkt werden bzw. geparkte Raupenfahrzeuge auf die Fahrbahnanordnung 1022 außerhalb der Revolveranordnung gebracht werden. Die einzelnen Transportabschnitte 1168 bilden jeweils versetzte Aufnahmeräume aus.

Anstelle der Revolveranordnung 1172 - oder in jeder beliebigen Etage des Gebäudes 148 oberhalb der Revolveranordnung - kann, analog zum Transportabschnitt 140` des Fahrzeugsystems 102 ein drehbarer Transportabschnitt vorgesehen sein, welcher die Funktion des Transportabschnitts 1162 wahrnimmt, jedoch an einem unteren Wendepunkt des Paternoster-förmigen Bewegungspfads der Raupenfahrzeuge.

Die Fahrbahnanordnung 1022 verläuft in dem hier beschriebenen Ausführungsbeispiel vertikal und kann von zwei entgegengesetzt angeordneten Seiten befahren werden. Allgemein können Fahrbahnanordnungen, welche von zwei entgegengesetzt angeordneten Seiten, also "back-to-back" befahren werden können beliebig, insbesondere horizontal ausgerichtet sein.

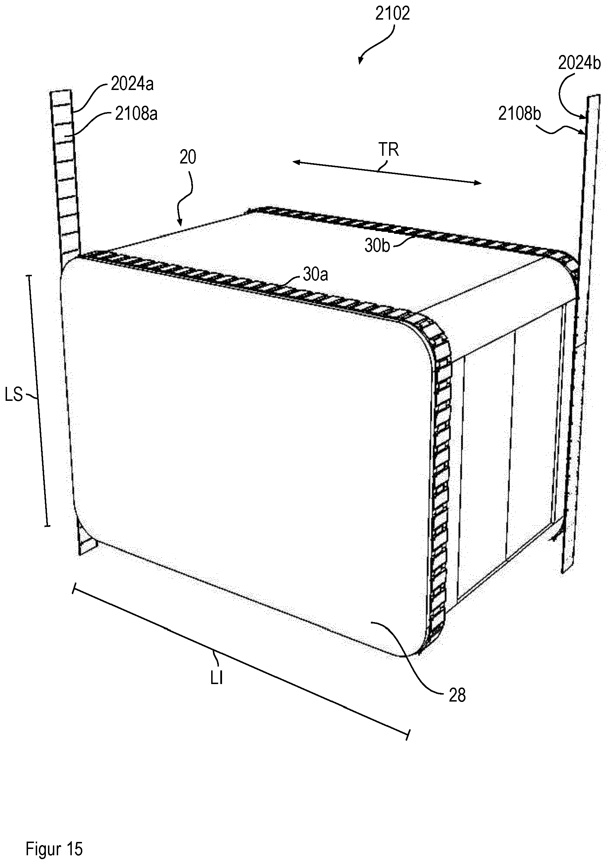

Im Folgenden wird eine in Figur 15 gezeigte weitere Ausführungsform des Fahrzeugsystems 2102 beschrieben, wobei nur auf die Unterschiede zur Ausführungsform des Fahrzeugsystems 102 und der darin verwendeten Raupenfahrzeuge 20 Bezug genommen wird. Für die Beschreibung der weiteren Elemente, Teile und Baugruppen wird auf die erste Ausführungsform verwiesen, wobei in der zweiten Ausführungsform, Elemente, Teile und Baugruppen mit einem um 2000 erhöhten Bezugszeichen gegenüber denjenigen Elementen, Teilen und Baugruppen der ersten Ausführungsform bezeichnet werden, denen sie entsprechen. Teilweise sind in den Figuren Details der Ausführungsformen weggelassen, jedoch können die Aspekte der ersten Ausführungsform des Fahrzeugsystems 102 für die weiteren Ausführungsform des Fahrzeugsystems 1102 verwendet werden.

Figur 15 zeigt das Fahrzeugsystem 2102, in welchem ein Raupenfahrzeug 20 verwendet wird, wie es bereits in der Anmeldung beschrieben worden ist. Das Fahrzeugsystem 2102 weist zwei Fahrrinnen 2024a, 2024b auf, die parallel zueinander verlaufen und deren Fahrrinnengründe 2108a, 2108b ebenso parallel zu einander verlaufen. In einer Tiefenrichtung TR (der Doppelpfeil in Figur 15 zeigt die Tiefenrichtung beider Fahrrinnen 2024a, 2024b) der Fahrrinnengründe sind die Fahrrinnengründe 2108a, 2108b gegeneinander versetzt und die Öffnungen der Fahrrinnen 2024a, 2024b weisen in im Wesentlichen entgegengesetzte Richtungen. Ebenso sind die Fahrrinnengründe 2108a, 2108b in einer Richtung senkrecht zur Tiefenrichtung TR und senkrecht zu einer Erstreckungsrichtung mindestens einer, vorzugweise beider der Fahrrinnen 2024a, 2024b gegeneinander versetzt. Das Raupenfahrzeug 20 weist eine Erstreckung LI parallel zur Tiefenrichtung TR und eine Erstreckung LS parallel zur Erstreckungsrichtung mindestens einer, vorzugweise beider der Fahrrinnen 2024a, 2024b auf, wobei die Erstreckung LS geringer als die Erstreckung LI ist.

Die Fahrrinne 2024a ist in Kontakt mit der Antriebsraupe 30a und die Fahrrinne 2024b ist in Kontakt mit der Antriebsraupe 30b beim bestimmungsgemäßen Betrieb des Fahrzeugsystems 2102, wobei die Antriebsraupen 30a, 30b sich gegenläufig bewegen. Eine derartige Anordnung verringert ein Kippmoment des Raupenfahrzeugs 20 relativ zu der die Fahrrinnen 2024a und 2024 umfassenden Fahrbahnanordnung des Fahrzeugsystems 2102.

Es ist auch möglich, wie in Figur 4 gezeigt, für das Raupenfahrzeug 20' zwei gegenüberliegende Fahrbahnanordnungen 22a' und 22b' vorzusehen, von welchen jede ein Paar von Fahrrinnen 24' umfasst. Die Fahrbahnanordnungen 22a' und 22b' sind dabei bevorzugt spiegelbildlich bezüglich einer zur Richtung des Abstands zwischen den Fahrbahnanordnungen 22a' und 22b' orthogonalen Symmetrieebene ausgebildet und angeordnet.

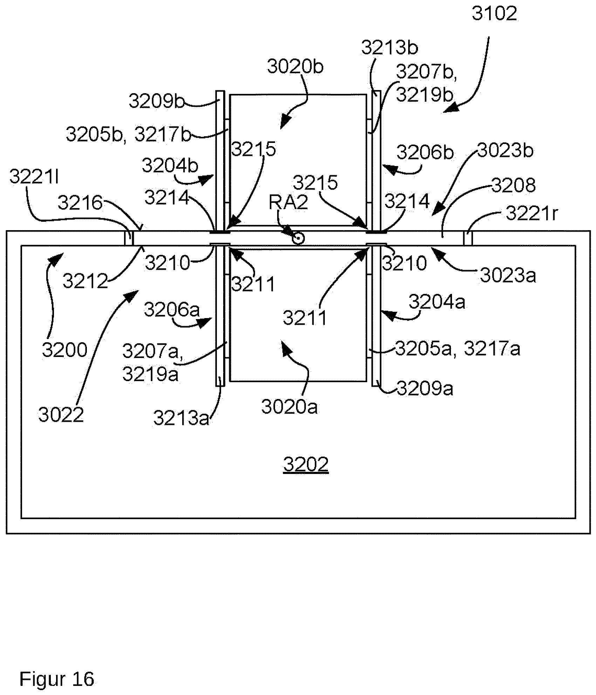

Figur 16 zeigt schematisch eine Ausführungsform eines als Aufzugssystem ausgebildeten Fahrzeugsystems 3102, umfassend zwei, vorzugsweise jeweils erfindungsgemäße, Raupenfahrzeuge 3020a, 3020b und eine Fahrbahnanordnung 3022. Die Fahrbahnanordnung 3022 ist an einer Wand 3200 eines Aufzugsschachts 3202 angeordnet, wobei die Zeichenfläche der Figur 16 senkrecht zu dem Bewegungspfad des Raupenfahrzeugs 3020a verläuft. Die Fahrbahnanordnung 3022 kann Fahrrinnen umfassen.

Jedes der Raupenfahrzeuge 3020a, 3020b umfasst eine erste Anordnung 3204a, 3204b mit einer ersten Lastenbaugruppe 3205a, 3205b, einer ersten Antriebsraupe 3209a, 3209b und einem ersten Linearmotor sowie eine zweite Anordnung 3206a, 3206b mit einer zweiten Lastenbaugruppe 3207a, 3207b, einer zweiten Antriebsraupe 3213a, 3213b und einem zweiten Linearmotor. Die jeweiligen Lastenbaugruppen 3205a, 3205b, 3207a, 3207b sind vorzugsweise an dem Lastenaufnahmeraum, hier einer Kabine, des jeweiligen Raupenfahrzeugs 3020a, 3020b befestigt. Die Linearmotoren sind nicht explizit in Figur 16 gezeigt, da sie von den jeweiligen Antriebsraupen und Lastenbaugruppen verdeckt sind.

Die ersten 3205a, 3205b oder/und die zweiten 3207a, 3207b Lastenbaugruppen können jeweils einen zugeordneten ersten 3217a, 3217b bzw. zweiten Rahmen 3219a, 3219b umfassen, wobei die erste Lastenbaugruppe 3205a, 3205b durch den ersten Rahmen 3217a, 3217b ausgebildet sein kann oder/und wobei die zweite Lastenbaugruppe 3207a, 3207b durch den zweiten Rahmen 3219a, 3219b ausgebildet sein kann. Vorzugsweise ist die erste 3205a, 3205b oder/und zweite 3207a, 3207b Lastenbaugruppe, oder der diese Lastenbaugruppe ausbildende Rahmen, mit der Kabine des jeweiligen Raupenfahrzeugs 3020a, 3020b verschraubt oder/und verschweißt oder/und vernietet oder/und verklebt. An dem ersten Rahmen ist 3217a, 3217b ist ein Stator des ersten Linearmotors ortsfest bezüglich des ersten Rahmens 3217a, 3217b unter Verwendung von Schrauben oder/und Nieten oder/und Schweißnähten oder/und einem Kleber angeordnet oder/und an dem zweiten Rahmen 3219a, 3219b ist ein Stator des zweiten Linearmotors ortsfest bezüglich des zweiten Rahmens 3219a, 3219b unter Verwendung von Schrauben oder/und Nieten oder/und Schweißnähten oder/und einem Kleber angeordnet.

Die Fahrbahnanordnung 3022 ist insbesondere abschnittsweise an einem Wandabschnitt 3208 der Wand 3200 angeordnet, welcher um eine Rotationsachse RA2 drehbar angeordnet ist. Die Rotationsachse RA2 verläuft vorzugsweise lotrecht.

Der an dem Wandabschnitt 3208 verlaufende Abschnitt der Fahrbahnanordnung 3022 umfasst einen ersten Abschnitt 3210 ihrer Trageanordnung und einen ersten Abschnitt 3211 ihrer Raupenaufstandsfläche. Der erste Abschnitt 3210 der Trageanordnung und der erste Abschnitt 3211 der Raupenaufstandsfläche sind jeweils an einer ersten Seite 3212 des Wandabschnitts 3208 und somit an einer ersten Seite der Fahrbahnanordnung angeordnet. Der an dem Wandabschnitt 3208 verlaufende Abschnitt der Fahrbahnanordnung 3022 umfasst ferner einen zweiten Abschnitt 3214 ihrer Trageanordnung und einen zweiten Abschnitt 3215 ihrer Raupenaufstandsfläche. Der zweite Abschnitt 3214 der Trageanordnung und der zweite Abschnitt 3215 der Raupenaufstandsfläche sind jeweils an einer der ersten Seite 3212 entgegengesetzt angeordneten zweiten Seite 3216 des Wandabschnitts 3208 und somit an einer der ersten Seite entgegengesetzt angeordneten zweiten Seite der Fahrbahnanordnung 3022 angeordnet.

Der Wandabschnitt 3208 mit den oben beschriebenen an ihm an der ersten Seite 3212 angeordneten Abschnitten der Fahrbahnanordnung 3022 bildet einen ersten Transportabschnitt 3023a der Fahrbahnanordnung aus und der Wandabschnitt 3208 mit den oben beschriebenen an ihm an der zweiten Seite 3216 angeordneten Abschnitten der Fahrbahnanordnung 3022 bildet einen zweiten Transportabschnitt 3023b der Fahrbahnanordnung aus.

Die Rotationsachse RA2 verläuft vorzugsweise senkrecht zur Zeichenebene und somit parallel zum Bewegungspfad des sich in dem Aufzugsschacht 3202 befindenden Raupenfahrzeugs 3020a.

Der Transportabschnitt 3023a befindet sich in einer Ruheposition und einer Übergabeposition, in welcher das Raupenfahrzeug 3020a auf diesen Transportabschnitt 3023a fahren kann und ihn auch verlassen kann. Sofern das Raupenfahrzeug 3020a in dieser Position verharrt, kann der Wandabschnitt 3208 um die Rotationsachse RA2 gedreht, und mit ihm die Transportabschnitte 3023a, 3023b rotatorisch derart versetzt werden, dass der Transportabschnitt 3023a aus einer Übergabeposition in eine Parkposition überführt wird und der Transportabschnitt 3023b von einer Parkposition in eine Übergabeposition überführt wird. Sofern kein weiteres Raupenfahrzeug 3020b an dem Transportabschnitt 3023b angeordnet ist, wird der Aufzugschacht nach diesem Versatz frei und die bisher von dem Raupenfahrzeug 3020a eingenommene Position kann von einem z.B. sich senkrecht zur Zeichenebene bewegenden nicht gezeigten, weiteren Raupenfahrzeug eingenommen werden.

Der Transportabschnitt 3023b befindet sich in Figur 16 mit dem daran gezeigten Raupenfahrzeug 3020b vorzugsweise in einer Ruheposition und einer Parkposition, in welcher das Raupenfahrzeug 3020b beladen, entladen oder geparkt werden kann.

Der hier beschriebene Wandabschnitt 3208 kann einen Übergang des Fahrzeugsystems 3102 zum den Fahrstuhlschacht 3202 umgebenden Gebäude ausbilden aber auch einen Übergang von dem Fahrstuhlschacht 3202 zu einer Anfahrtsposition eines Raupenfahrzeugs ausbilden, an welcher ein Raupenfahrzeug in den Fahrzeugschacht von außen eintreten kann. Bei diesem Eintritt kann das Raupenfahrzeug auf den Transportabschnitt 3023b fahren und dann durch Rotation des Wandabschnitts 3208 um 180° um die Rotationsachse RA2 in den Fahrstuhlschacht 3202 eintreten.

Insbesondere kann der hier beschriebene Wandabschnitt 3208 einen Übergang zu dem im Zusammenhang mit der Figur 13 beschriebenen Gebäude 148 darstellen, wobei der Wandabschnitt 3208 mit Transportabschnitt 3023a oder/und Transportabschnitt 3023b Teil der Fahrbahnanordnung 22 der Figur 13 sein kann.

Der Wandabschnitt 3208 ist von dem restlichen Abschnitt der Wand 3200 durch Spalte getrennt, von denen die Spalte 3221l, 3221r in der Figur 16 dargestellt sind, um die Drehung des Wandabschnitts 3208 um die Rotationsachse RA2 zu ermöglichen. Ein Spaltmaß der Spalte 3221l, 3221r ist vorzugsweise so gewählt, dass der Wandabschnitt 3208 mit einem ersten bestimmungsgemäß, insbesondere zentral, auf dem ersten Transportabschnitt 3023a angeordneten Raupenfahrzeug 3020a oder/und mit einem zweiten bestimmungsgemäß, insbesondere zentral, auf dem zweiten Transportabschnitt 3023b angeordneten Raupenfahrzeug 3020b durch Rotation um die Rotationsachse RA2 um 180° oder/und 360° versetzt werden kann.

In Bezug auf die Fahrbahnanordnung, deren Teile, das Zusammenwirken der Teile der ersten bzw. zweiten Anordnung, insbesondere zur Bereitstellung eines Antriebs sowie der Haftung an magnetisierbaren Flächen oder an Fahrbahnanordnungen, wird auf die Beschreibung der vorangehenden Ausführungsformen verwiesen, deren Merkmale auch in der Ausführungsform der Figur 16 Verwendung finden können.

## Patentansprüche

1. Raupenfahrzeug (20; 20'; 20"; 1020; 3020a, 3020b), umfassend:
- eine Lastenbaugruppe (26),
- eine Antriebsraupe (30a, 30b), welche an der Lastenbaugruppe (26) zur Ausführung einer Bewegung längs einer Umlaufbahn (U) der Antriebsraupe (30a, 30b) beweglich gehalten ist,
- einen Linearmotor (32a, 32b), wobei ein Stator (34) des Linearmotors (32a, 32b) ortsfest bezüglich der Lastenbaugruppe (26) angeordnet ist und wobei ein Läufer (36) des Linearmotors (32a, 32b) zur gemeinsamen Bewegung mit der Antriebsraupe (30a, 30b) angeordnet ist,
wobei der Läufer (36) zur gemeinsamen Bewegung mit der Antriebsraupe (30a, 30b) ausgebildete Permanentmagnete (38) aufweist,
**dadurch gekennzeichnet, dass** der Läufer (36) in der Antriebsraupe (30a, 30b) ausgebildet ist, wobei die zur gemeinsamen Bewegung mit der Antriebsraupe (30a, 30b) ausgebildeten Permanentmagnete (38) in der Antriebsraupe (30a, 30b) angeordnet sind.

2. Raupenfahrzeug (20; 20'; 20"; 1020; 3020a, 3020b) nach Anspruch 1,
wobei längs der Umlaufbahn (U) in der Antriebsraupe (30a, 30b) hintereinander angeordnete Permanentmagnetanordnungen mit alternierender entgegengesetzter Polarisationsrichtung angeordnet sind, wobei jede Permanentmagnetanordnung wenigstens einen Permanentmagneten (38) aufweist, wobei vorzugsweise längs der Umlaufbahn (U) einander direkt aufeinanderfolgende und in der Antriebsraupe (30a, 30b) angeordnete Permanentmagnetanordnungen (38) mit alternierender entgegengesetzter Polarisationsrichtung angeordnet sind.

3. Raupenfahrzeug (20; 20'; 20"; 1020; 3020a, 3020b) nach einem der vorhergehenden Ansprüche,
wobei der Stator (34) längs wenigstens eines Abschnitts der Umlaufbahn (U) hintereinander angeordnete Statorwicklungen (54a bis 54d) zur Erzeugung ei-nes Magnetfelds bei Bestromung der Statorwicklungen (54a bis 54d) aufweist, und
wobei das Raupenfahrzeug (20; 20'; 20"; 1020; 3020a, 3020b) einen mit den Statorwicklungen (54a bis 54d) elektrisch leitend verbundenen Stromrichter (56) aufweist.

4. Raupenfahrzeug (20; 20'; 20"; 1020; 3020a, 3020b) nach Anspruch 3,
ferner umfassend einen Energiespeicher (60) zur Versorgung des Stromrichters (56) mit elektrischer Energie, wobei vorzugsweise der Energiespeicher (60) separat vom Stromrichter (56) ausgebildet ist.

5. Raupenfahrzeug (20; 20'; 20"; 1020; 3020a, 3020b) nach Anspruch 3 oder Anspruch 4,
ferner umfassend einen Stromabnehmer (58) zur Versorgung des Stromrichters (56) mit elektrischer Energie.

6. Raupenfahrzeug (20; 20'; 20"; 1020; 3020a, 3020b) nach einem der vorhergehenden Ansprüche, wobei die Antriebsraupe (30a, 30b) einen Neutralisierungstrum (70) umfasst, an welchem eine aktivierbare Neutralisierungsmagnetanordnung des Raupenfahrzeugs (20; 20'; 20"; 1020; 3020a, 3020b) angeordnet ist;
wobei die Neutralisierungsmagnetanordnung dafür eingerichtet ist, in dem Neutralisierungstrum (70) ein Magnetfeld auszubilden, welches ein Magnetfeld wenigstens eines Permanentmagneten (38), der sich in dem Neutralisierungstrum (70) befindet, betragsmäßig abschwächt oder neutralisiert.

7. Raupenfahrzeug (20; 20'; 20"; 1020; 3020a, 3020b) nach Anspruch 6,
wobei die Antriebsraupe (30a, 30b) einen Aufstandsflächenkontakttrum (62; 62`; 62ʺʺ) und zwei Umlenktrume umfasst, wobei jeder Umlenktrum entlang der Umlaufbahn (U) direkt an den Aufstandsflächenkontakttrum (62; 62‴; 62ʺʺ) anschließt; und
wobei der Neutralisierungstrum (70) einen an einen der Umlenktrume direkt angrenzenden Abschnitt des Aufstandsflächenkontakttrums (62; 62`; 62ʺʺ) umfasst oder/und einen Abschnitt der Antriebsraupe (30a, 30b) in einem Übergangsbereich zwischen dem Aufstandsflächenkontakttrum (62; 62`; 62ʺʺ) und einem Umlenktrum umfasst oder/und einen Abschnitt des Aufstandsflächenkontakttrums (62; 62`; 62ʺʺ) oder den vollständigen Aufstandsflächenkontakttrum (62; 62'; 62ʺʺ) umfasst.

8. Raupenfahrzeug (20; 20'; 20"; 1020; 3020a, 3020b) nach einem der vorhergehenden Ansprüche, wobei die Antriebsraupe (30a, 30b) einen Aufstandsflächenkontakttrum (62; 62'; 62ʺʺ) und zwei Umlenktrume umfasst, wobei jeder Umlenktrum entlang der Umlaufbahn (U) direkt an den Aufstandsflächenkontakttrum (62; 62'; 62ʺʺ) anschließt; und
wobei der Stator (34) längs wenigstens eines Abschnitts der Umlaufbahn (U) hintereinander angeordnete Statorwicklungen (54a bis 54d) zur Erzeugung eines Magnetfelds bei Bestromung der Statorwicklungen (54a bis 54d) aufweist, welche entlang wenigstens eines der Umlenktrume oder/und entlang des Aufstandsflächenkontakttrums (62; 62`; 62ʺʺ) oder/und entlang eines vom Aufstandsflächenkontakttrum (62; 62'; 62ʺʺ) verschiedenen und zwischen den Umlenktrumen angeordneten weiteren Trum der Antriebsraupe (30a, 30b) oder/und entlang der gesamten Umlaufbahn (U) angeordnet sind.

9. Raupenfahrzeug (20; 20'; 20"; 1020; 3020a, 3020b) nach einem der vorhergehenden Ansprüche, wobei die Lastenbaugruppe (26) ein Gestell (75i, 75ii, 75iii, 75iiii) aufweist, welches den Stator (34) trägt, wobei die Antriebsraupe (30a, 30b) das Gestell (75i, 75ii, 75iii, 75iiii) umläuft.

10. Raupenfahrzeug (20; 20'; 20"; 1020; 3020a, 3020b) nach einem der vorhergehenden Ansprüche, wobei die Antriebsraupe (30a, 30b) eine Mehrzahl von miteinander schwenkbar verbundenen Kettengliedern (40) umfasst, wobei in einer Mehrzahl der Kettenglieder (40) wenigstens ein Permanentmagnet (38) des Läufers (40) angeordnet ist, wobei bevorzugt Material des Kettengliedes (40) den wenigstens einen Permanentmagneten (38) umgibt oder das Kettenglied (40) aus einem Permanentmagneten (38) ausgebildet ist.

11. Fahrzeugsystem (102; 1102; 2102; 3102), umfassend
- ein Raupenfahrzeug (20; 20'; 20"; 1020; 3020a, 3020b) nach einem der vorhergehenden Ansprüche und
- eine Fahrbahnanordnung (22; 1022; 3022),
wobei die Fahrbahnanordnung (22; 1022; 3022) eine Raupenaufstandsfläche (109; 3211, 3215) aufweist, welche dafür eingerichtet ist, mit der Antriebsraupe (30a, 30b) in Berührkontakt zu treten und
wobei die Fahrbahnanordnung (22; 1022; 3022) eine entlang der Raupenaufstandsfläche (109; 3211, 3215) verlaufende magnetisierbare erste Trageanordnung umfasst,
wobei die Permanentmagnete (38) und die erste Trageanordnung derart ausgebildet sind, dass zwischen den Permanentmagneten (38) und der ersten Trageanordnung (23) durch eine magnetische Wechselwirkung zwischen den Permanentmagneten (38) und der ersten Trageanordnung (23; 3210, 3214) eine wechselseitig anziehende Magnetkraft wirkt.

12. Fahrzeugsystem (102; 1102; 2102; 3102) nach Anspruch 11, wobei die Magnetkraft betragsmäßig größer als 50%, bevorzugt 75%, besonders bevorzugt 100%, höchstbevorzugt 150% oder 250% einer Gewichtskraft eines zulässigen Gesamtgewichts des Raupenfahrzeugs (20; 20`; 20"; 1020; 3020a, 3020b) ist.

13. Fahrzeugsystem (102; 1102; 2102; 3102) nach Anspruch 11 oder 12, wobei die Fahrbahnanordnung (22; 1022; 3022) eine Fahrrinne (24; 1024; 2024a, 2024b) aufweist, deren Verlauf einen Bewegungspfad des Raupenfahrzeugs (20; 20'; 20"; 1020; 3020a, 3020b) entlang der Raupenaufstandsfläche (109; 3211, 3215) zumindest abschnittsweise definiert, wobei bevorzugt die Fahrrinne (24; 1024; 2024a, 2024b) sich in ihrer Tiefenrichtung in Richtung auf den Fahrrinnengrund (108; 2108a, 2108b) hin verjüngt.

14. Fahrzeugsystem (102; 1102; 2102; 3102) nach einem der Ansprüche 11 bis 13, wobei die Fahrbahnanordnung (22; 1022; 3022) an der Raupenaufstandsfläche (109) angeordnete Vorsprünge (116) oder/und Vertiefungen, und die Antriebsraupe (30a, 30b) an einer Aufstandsflächenkontaktfläche (122) der Antriebsraupe (30a, 30b) angeordnete Vertiefungen (116) oder/und Vorsprünge derart aufweisen, dass bei Berührkontakt der Raupenaufstandsfläche (109) mit der Aufstandsflächenkontaktfläche (122) ein Formschluss ausgebildet ist, welcher im Wesentlichen parallel zu einem der Aufstandsflächenkontaktfläche (122) zugeordneten Abschnitt der Umlaufbahn (U) wirkt.

15. Fahrzeugsystem (102; 1102; 2102; 3102) nach einem der Ansprüche 12 bis 14,
wobei die Fahrbahnanordnung (22; 1022; 3022)
- einen einen Abschnitt der Raupenaufstandsfläche (109; 3211, 3215) und einen Abschnitt der ersten Trageanordnung (23) umfassenden ortsfesten Fahrabschnitt (140); und
- einen einen an den Fahrabschnitt (140) zumindest zeitweise angrenzenden weiteren Abschnitt der Raupenaufstandsfläche (109; 3211, 3215) und einen weiteren Abschnitt der ersten Trageanordnung (23; 3210, 3214) umfassenden Transportabschnitt (142, 142', 142", 142‴; 1162, 1168) umfasst;
wobei der weitere Abschnitt der Raupenaufstandsfläche (109; 3211, 3215) und der weitere Abschnitt der ersten Trageanordnung (23) ortsfest bezüglich des Transportabschnitts (142, 142', 142", 142‴; 1162, 1168) angeordnet sind, und wobei der Transportabschnitt (142, 142', 142", 142‴; 1162, 1168) zusammen mit dem weiteren Abschnitt der ersten Trageanordnung (23; 3210, 3214) und dem weiteren Abschnitt der Raupenaufstandsfläche (109; 3211, 3215) bezüglich des Fahrabschnitts (140) beweglich angeordnet ist.

## Claims

1. A tracked vehicle (20; 20'; 20"; 1020; 3020a, 3020b) encompassing:
- a load subassembly (26);
- a drive track (30a, 30b) that is retained movably on the load subassembly (26) in order to execute a motion along a circulation path (U) of the drive track (30a, 30b);
- a linear motor (32a, 32b), a stator (34) of the linear motor (32a, 32b) being arranged in stationary fashion with respect to the load subassembly (26), and a rotor (36) of the linear motor (32a, 32b) being arranged for motion together with the drive track (30a, 30b), wherein the rotor (36) comprises permanent magnets (38) which are embodied for motion together with the drive track (30a, 30b),
**characterized in that** the rotor (36) is embodied in the drive track (30a, 30b), wherein the permanent magnets (38) embodied for motion together with the drive track (30a, 30b) are arranged in the drive track (30a, 30b).

2. The tracked vehicle (20; 20'; 20"; 1020; 3020a, 3020b) according to Claim 1, permanent-magnet arrangements having an alternatingly opposite polarization direction being arranged one behind another in the drive track (30a, 30b) along the circulation path (U), each permanent-magnet arrangement comprising at least one permanent magnet (38), permanent-magnet arrangements (38) that are directly successive to one another along the circulation path (U) and are arranged in the drive track (30a, 30b) preferably being arranged with an alternatingly opposite polarization direction.

3. The tracked vehicle (20; 20'; 20"; 1020; 3020a, 3020b) according to one of the preceding claims,
the stator (34) comprising, along at least a portion of the circulation path (U), stator windings (54a to 54d) arranged one behind another for generating a magnetic field upon energization of the stator windings (54a to 54d);
and
the tracked vehicle (20; 20'; 20"; 1020; 3020a, 3020b) comprising a power converter (56) that is electrically conductively connected to the stator windings (54a to 54d).

4. The tracked vehicle (20; 20'; 20"; 1020; 3020a, 3020b) according to Claim 3, further encompassing an energy reservoir (60) for supplying the power converter (56) with electrical energy, the energy reservoir (60) preferably being embodied separately from the power converter (56).

5. The tracked vehicle (20; 20'; 20"; 1020; 3020a, 3020b) according to Claim 3 or Claim 4,
further encompassing a current collector (58) for supplying the power converter (56) with electrical energy.

6. The tracked vehicle (20; 20'; 20"; 1020; 3020a, 3020b) according to one of the preceding claims, the drive track (30a, 30b) encompassing a neutralization strand (70) on which an activatable neutralization magnet arrangement of the tracked vehicle (20; 20'; 20"; 1020; 3020a, 3020b) is arranged;
the neutralization magnet arrangement being configured to constitute, at the neutralization strand (70), a magnetic field that quantitatively weakens or neutralizes a magnetic field of at least one permanent magnet (38) that is located in the neutralization strand (70).

7. The tracked vehicle (20; 20'; 20"; 1020; 3020a, 3020b) according to Claim 6, the drive track (30a, 30b) encompassing one supporting surface contact strand (62; 62‴; 62ʺʺ) and two deflection strands, each deflection strand directly adjoining the supporting surface contact strand (62; 62‴; 62"") along the circulation path (U); and
the neutralization strand (70) encompassing a portion of the supporting surface contact strand (62; 62‴; 62ʺʺ) directly adjacent to one of the deflection strands, and/or encompassing a portion of the drive track (30a, 30b) in a transition region between the supporting surface contact strand (62; 62‴; 62"") and a deflection strand, and/or encompassing a portion of the supporting surface contact strand (62; 62‴; 62ʺʺ) or the entire supporting surface contact strand (62; 62‴; 62ʺʺ).

8. The tracked vehicle (20; 20'; 20"; 1020; 3020a, 3020b) according to one of the preceding claims, the drive track (30a, 30b) encompassing one supporting surface contact strand (62; 62‴; 62"") and two deflection strands, each deflection strand directly adjoining the supporting surface contact strand (62; 62‴; 62"") along the circulation path (U); and
the stator (34) comprising stator windings (54a to 54d), arranged one behind another along at least a portion of the circulation path (U), for generating a magnetic field upon energization of the stator windings (54a to 54d), which are arranged along at least one of the deflection strands and/or along the supporting surface contact strand (62; 62‴; 62"") and/or along a further strand of the drive track (30a, 30b) which differs from the supporting surface contact strand (62; 62‴; 62"") and is arranged between the deflection strands, and/or are arranged along the entire circulation path (U).

9. The tracked vehicle (20; 20'; 20"; 1020; 3020a, 3020b) according to one of the preceding claims, wherein the load subassembly (26) comprises a frame (75i, 75ii, 75iii, 75iiii) carrying the stator (34), wherein the drive track (30a, 30b) circles the frame (75i, 75ii, 75iii, 75iiii).

10. The tracked vehicle (20; 20'; 20"; 1020; 3020a, 3020b) according to one of the preceding claims, wherein the drive track (30a, 30b) comprises a plurality of chain links (40) connected pivotably to one another, wherein in a plurality of the chain links (40) at least one permanent magnet (38) of the rotor (40) is arranged, wherein preferably material of the chain link (40) surrounds the at least one permanent magnet (38) or the chain link (40) is constituted from a permanent magnet (38).

11. A vehicle system (102; 1102; 2102; 3102) encompassing:
- a tracked vehicle (20; 20'; 20"; 1020; 3020a, 3020b) according to one of the preceding claims; and
- a travel path arrangement (22; 1022; 3022),
the travel path arrangement (22; 1022; 3022) comprising a track supporting surface (109; 3211, 3215) that is configured to come into direct contact with the drive track (30a, 30b), and
the travel path arrangement (22; 1022; 3022) encompassing a magnetizable first carrying arrangement extends along the track supporting surface (109; 3211, 3215),
the permanent magnets (38) and the first carrying arrangement being embodied in such a way that a mutually attractive magnetic force acts between the permanent magnets (38) and the first carrying arrangement (23) as a result of a magnetic interaction between the permanent magnets (38) and the first carrying arrangement (23; 3210, 3214).

12. The vehicle system (102; 1102; 2102; 3102) according to Claim 11, the magnitude of the magnetic force being greater at least than 50%, preferably 75%, particularly preferably 100%, highly preferably 150% or 250%, of a weight force of a permissible total weight of the tracked vehicle (20; 20'; 20"; 1020; 3020a, 3020b).

13. The vehicle system (102; 1102; 2102; 3102) according to Claim 11 or 12, the travel path arrangement (22; 1022; 3022) comprising a travel channel (24; 1024; 2024a, 2024b) whose course defines, at least in portions, a motion path of the tracked vehicle (20; 20'; 20"; 1020; 3020a, 3020b) along the track supporting surface (109; 3211, 3215), wherein preferably the travel channel (24; 1024; 2024a, 2024b) tapers in its depth direction in a direction toward the travel channel bottom (108; 2108a, 2108b).

14. The vehicle system (102; 1102; 2102; 3102) according to one of Claims 11 to 13, the travel path arrangement (22; 1022; 3022) comprising projections (116) and/or depressions arranged on the track supporting surface (109), and the drive track (30a, 30b) comprising depressions (116) and/or projections arranged on a supporting surface contact surface (122) of the drive track (30a, 30b), in such a way that upon direct contact between the track supporting surface (109) and the supporting surface contact surface (122), a positive engagement is constituted which acts substantially parallel to a portion of the circulation path (U) which is associated with the supporting surface contact surface (122).

15. The vehicle system (102; 1102; 2102; 3102) according to one of Claims 12 to 14,
the travel path arrangement (22; 1022; 3022) encompassing:
- a stationary travel portion (140) that encompasses a portion of the track supporting surface (109; 3211, 3215) and a portion of the first carrying arrangement (23);
- a transport portion (142, 142', 142", 142"'; 1162, 1168) that comprises a further portion of the track supporting surface (109; 3211, 3215) which is at least temporarily adjacent to the travel portion (140), and a further portion of the first carrying arrangement (23; 3210, 3214),
the further portion of the track supporting surface (109; 3211, 3215) and the further portion of the first carrying arrangement (23) being arranged in stationary fashion with reference to the transport portion (142, 142', 142", 142‴; 1162, 1168), and the transport portion (142, 142', 142", 142‴; 1162, 1168), together with the further portion of the first carrying arrangement (23; 3210, 3214) and the further portion of the track supporting surface (109; 3211, 3215), being arranged movably with reference to the travel portion (140).

## Revendications

1. Véhicule à chenilles (20; 20'; 20"; 1020; 3020a, 3020b), comprenant :
- un ensemble de charge (26),
- une chenille d'entraînement (30a, 30b) supportée de manière mobile sur l'ensemble de charge (26) pour effectuer un mouvement le long d'une trajectoire orbitale (U) de la chenille d'entraînement (30a, 30b),
- un moteur linéaire (32a, 32b), dans lequel un stator (34) du moteur linéaire (32a, 32b) est disposé de manière fixe par rapport à l'ensemble de charge (26) et dans lequel un rotor (36) du moteur linéaire (32a, 32b) est disposé pour un mouvement commun avec la chenille d'entraînement (30a, 30b),
dans lequel le rotor (36) comprend des aimants permanents (38) conçus pour se déplacer conjointement avec la chenille d'entraînement (30a, 30b),
**caractérisé en ce que** le rotor (36) est formé dans la chenille d'entraînement (30a, 30b), dans lequel les aimants permanents (38) formés pour se déplacer conjointement avec la chenille d'entraînement (30a, 30b) sont disposés dans la chenille d'entraînement (30a, 30b).

2. Véhicule à chenilles (20; 20'; 20"; 1020; 3020a, 3020b) selon la revendication 1, dans lequel des ensembles d'aimants permanents disposés les uns derrière les autres le long de la trajectoire orbitale (U) sont disposés dans la chenille d'entraînement (30a, 30b) avec des directions de polarisation opposées alternées, dans lequel chaque ensemble d'aimants permanents présente au moins un aimant permanent (38), dans lequel de préférence des ensembles d'aimants permanents (38) se suivant directement les uns les autres le long de la trajectoire orbitale (U) et disposés dans la chenille d'entraînement (30a, 30b) sont disposés avec des directions de polarisation opposées alternées.

3. Véhicule à chenilles (20; 20'; 20"; 1020; 3020a, 3020b) selon l'une quelconque des revendications précédentes,
dans lequel le stator (34) comporte des enroulements de stator (54a à 54d) disposés les uns derrière les autres le long d'au moins une section de la trajectoire orbitale (U) pour générer un champ magnétique lorsque les enroulements de stator (54a à 54d) sont alimentés; et
dans lequel le véhicule à chenilles (20; 20'; 20"; 1020; 3020a, 3020b) présente un convertisseur de courant (56) relié de manière électriquement conductrice aux enroulements de stator (54a à 54d).

4. Véhicule à chenilles (20; 20'; 20"; 1020; 3020a, 3020b) selon la revendication 3, comprenant en outre un accumulateur d'énergie (60) pour alimenter le convertisseur de courant (56) en énergie électrique, dans lequel de préférence l'accumulateur d'énergie (60) est réalisé séparément du convertisseur de courant (56).

5. Véhicule à chenilles (20; 20'; 20"; 1020; 3020a, 3020b) selon la revendication 3 ou la revendication 4,
comprenant en outre un collecteur de courant (58) pour alimenter le convertisseur de courant (56) en énergie électrique.

6. Véhicule à chenilles (20; 20'; 20"; 1020; 3020a, 3020b) selon l'une quelconque des revendications précédentes, dans lequel la chenille d'entraînement (30a, 30b) comprend un tronçon de neutralisation (70) sur lequel est disposé un ensemble d'aimants de neutralisation activable du véhicule à chenilles (20; 20'; 20"; 1020; 3020a, 3020b);
dans lequel l'ensemble d'aimant de neutralisation est adapté pour former dans le tronçon de neutralisation (70) un champ magnétique qui atténue ou neutralise en valeur absolue un champ magnétique d'au moins un aimant permanent (38) qui se trouve dans le tronçon de neutralisation (70).

7. Véhicule à chenilles (20; 20'; 20"; 1020; 3020a, 3020b) selon la revendication 6, dans lequel la chenille d'entraînement (30a, 30b) comprend un tronçon de contact de surface d'appui (62; 62'; 62"") et deux tronçons de déviation, dans lequel chaque tronçon de déviation est directement adjacent au tronçon de contact de surface d'appui (62; 62‴; 62"") le long de la trajectoire orbitale (U); et
dans lequel le tronçon de neutralisation (70) comprend une section de tronçon de contact de surface d'appui (62; 62'; 62"") directement adjacente à l'un des tronçons de renvoi ou/et une section de la chenille d'entraînement (30a, 30b) dans une zone de transition entre le tronçon de contact de surface d'appui (62; 62'; 62"") et un tronçon de renvoi ou/et comprend une section du tronçon de contact de surface d'appui (62; 62'; 62"") ou le tronçon de contact de surface d'appui complet (62; 62'; 62"").

8. Véhicule à chenilles (20; 20'; 20"; 1020; 3020a, 3020b) selon l'une quelconque des revendications précédentes, dans lequel la chenille d'entraînement (30a, 30b) comprend un tronçon de contact de surface d'appui (62; 62'; 62"") et deux tronçons de renvoi, dans lequel chaque tronçon de renvoi se raccorde directement au tronçon de contact de surface d'appui (62; 62'; 62"") le long de la trajectoire orbitale (U); et
dans lequel le stator (34) présente, le long d'au moins une section de la trajectoire orbitale (U), des enroulements de stator (54a à 54d) disposés les uns derrière les autres pour générer un champ magnétique lors de l'alimentation en courant des enroulements de stator (54a à 54d), qui sont disposés le long d'au moins l'un des tronçons de renvoi ou/et le long du tronçon de contact de surface d'appui (62; 62'; 62'") ou/et le long d'un autre tronçon de la chenille d'entraînement (30a, 30b) différent du tronçon de contact de surface d'appui (62; 62'; 62"") et disposé entre les tronçons de renvoi ou/et le long de l'ensemble de la trajectoire orbitale (U).

9. Véhicule à chenilles (20; 20'; 20"; 1020; 3020a, 3020b) selon l'une quelconque des revendications précédentes, dans lequel l'ensemble de charge (26) comprend un châssis (75i, 75ii, 75iii, 75iiii) portant le stator (34), dans lequel la chenille d'entraînement (30a, 30b) tourne autour du châssis (75i, 75ii, 75iii, 75iiii).

10. Véhicule à chenilles (20; 20'; 20"; 1020; 3020a, 3020b) selon l'une quelconque des revendications précédentes, dans lequel la chenille d'entraînement (30a, 30b) comprend une pluralité de maillons (40) reliés entre eux de manière pivotante, dans lequel au moins un aimant permanent (38) de la chenille (40) est disposé dans une pluralité des maillons (40),dans lequel de préférence du matériau du maillon (40) entoure ledit au moins un aimant permanent (38) ou le maillon (40) est formé d'un aimant permanent (38).

11. Système de véhicule (102; 1102; 2102; 3102), comprenant
- un véhicule à chenilles (20; 20'; 20"; 1020; 3020a, 3020b) selon l'une des revendications précédentes et
- un ensemble de chaussée (22; 1022; 3022),
dans lequel l'ensemble de chaussée (22; 1022; 3022) présente une surface d'appui de chenille (109; 3211, 3215) adaptée pour entrer en contact avec la chenille d'entraînement (30a, 30b) et dans lequel l'ensemble de chaussée (22; 1022; 3022) comprend un premier ensemble de support magnétisable s'étendant le long de la surface d'appui de chenille (109; 3211, 3215),
dans lequel les aimants permanents (38) et le premier ensemble de support sont formés de telle sorte qu'une force magnétique d'attraction mutuelle agit entre les aimants permanents (38) et le premier ensemble de support (23) par une interaction magnétique entre les aimants permanents (38) et le premier ensemble de support (23; 3210, 3214).

12. Système de véhicule (102; 1102; 2102; 3102) selon la revendication 11, dans lequel la force magnétique est supérieure en valeur absolue à 50%, de préférence 75%, de manière particulièrement préférée 100%, de manière la plus préférée 150% ou 250% d'une force de poids d'un poids total admissible du véhicule à chenilles (20; 20'; 20"; 1020; 3020a, 3020b).

13. Système de véhicule (102; 1102; 2102; 3102) selon la revendication 11 ou 12, dans lequel l'ensemble de chaussée (22; 1022; 3022) présente un chenal (24; 1024; 2024a, 2024b) dont le tracé, au moins en partie, suit une trajectoire de déplacement du véhicule à chenille (20; 20'; 20"; 1020; 3020a, 3020b) le long de la surface d'appui de chenilles (109; 3211, 3215), dans lequel de préférence le chenal (24; 1024; 2024a, 2024b) se rétrécit dans sa direction vers le fond du chenal (108, 2108a, 2108b).

14. Système de véhicule (102; 1102; 2102; 3102) selon l'une quelconque des revendications 11 à 13, dans lequel l'ensemble de chaussée (22; 1022; 3022) présente des saillies (116) ou/et des creux disposés sur la surface d'appui de chenille (109), et la chenille d'entraînement (30a, 30b) présente des creux (116) ou/et des saillies disposés sur une surface de contact de la surface d'appui (122) de la chenille d'entraînement (30a, 30b) de telle sorte, qu'en cas de contact de la surface d'appui de chenille (109) avec la surface de contact de la surface d'appui (122), il est formé une liaison par la forme qui agit essentiellement parallèlement à une section de la trajectoire orbitale (U) associée à la surface de contact de la surface d'appui (122).

15. Système de véhicule (102; 1102; 2102; 3102) selon l'une des revendications 12 à 14,
dans lequel l'ensemble de chaussée (22; 1022; 3022) comprend
- une section de conduite fixe (140) comprenant une section de la surface d'appui de chenille (109; 3211, 3215) et une section du premier ensemble de support (23); et
- une section de transport (142, 142", 142", 142‴) comprenant une autre section de la surface d'appui de chenille (109; 3211, 3215) au moins temporairement adjacente à la section de déplacement (140) et une autre section du premier ensemble de support (23; 3210, 3214); 1162, 1168);
dans lequel l'autre section de la surface d'appui de chenille (109; 3211, 3215) et l'autre section du premier ensemble de support (23) sont disposées de manière fixe par rapport à la section de transport (142, 142', 142", 142‴; 1162, 1168), et dans lequel la section de transport (142, 142", 142", 142‴; 1162, 1168) est disposée de manière mobile par rapport à la section de déplacement (140), conjointement avec l'autre section du premier ensemble de support (23, 3210, 3214) et l'autre section de la surface d'appui de chenille (109, 3211, 3215).
